(19) Europäisches Patentamt
European Patent Office
Office européen des brevets

(11) **EP 0 812 070 B1**

(12) **FASCICULE DE BREVET EUROPEEN**

(45) Date de publication et mention
de la délivrance du brevet:
**22.10.2003 Bulletin 2003/43**

(51) Int Cl.⁷: **H04B 1/66**

(21) Numéro de dépôt: **97401250.2**

(22) Date de dépôt: **04.06.1997**

(54) **Procédé et dispositif de codage en compression d'un signal numérique**

Verfahren und Gerät zur Kompressionskodierung eines digitalen Signals

Method and device for compression encoding of a digital signal

(84) Etats contractants désignés:
**DE GB IT**

(30) Priorité: **06.06.1996 FR 9606982**

(43) Date de publication de la demande:
**10.12.1997 Bulletin 1997/50**

(73) Titulaires:
• **FRANCE TELECOM**
**75015 Paris (FR)**
• **TELEDIFFUSION DE FRANCE**
**75015 Paris (FR)**

(72) Inventeurs:
• **Moreau De Saint Martin, François**
**75009 Paris (FR)**

• **Philippe, Pierrick**
**56000 Vennes (FR)**
• **Durot, Xavier**
**35000 Rennes (FR)**

(74) Mandataire: **Fréchède, Michel**
**Cabinet Plasseraud**
**84, rue d'Amsterdam**
**F-75440 Paris Cédex 09 (FR)**

(56) Documents cités:
**EP-A- 0 421 259     EP-A- 0 578 063**
**US-A- 4 831 636     US-A- 5 301 255**

## Description

L'invention concerne un procédé et un dispositif de codage en compression d'un signal numérique, avec contrôle de l'erreur de reconstruction finale.

A l'heure actuelle, le traitement, le stockage et la transmission d'informations audio et/ou vidéo en volume croissant, en raison de la mise en oeuvre d'applications de plus en plus complexes, implique la mise en oeuvre de processus de codage en compression des données ou signaux numériques, supports de ces informations, de plus en plus sophistiqués. Ces processus de codage sont mis en oeuvre au niveau de codeurs correspondants, les données ou signaux numériques d'origine codés en compression étant transmis vers un ou plusieurs décodeurs réalisant des opérations de décodage, sensiblement inverses des opérations de codage en compression, afin de restituer un signal reconstruit, le plus proche possible du signal d'origine.

L'exploitation du signal d'origine puis du signal reconstruit, lorsque ce signal est un signal audio et/ou vidéo par exemple, implique la mise en oeuvre de processus de codage en compression - décodage permettant la transmission du signal codé, véhiculant l'information, puis la restitution d'un signal reconstruit présentant un minimum de dégradations, par rapport au signal d'origine, en particulier dans le domaine perceptif de ces signaux. Le domaine perceptif correspond à un domaine physique et physiologique tel que le domaine acoustique et auditif dans le cas de signaux audiofréquences, respectivement de domaine optique et visuel dans le cas de signaux vidéofréquences.

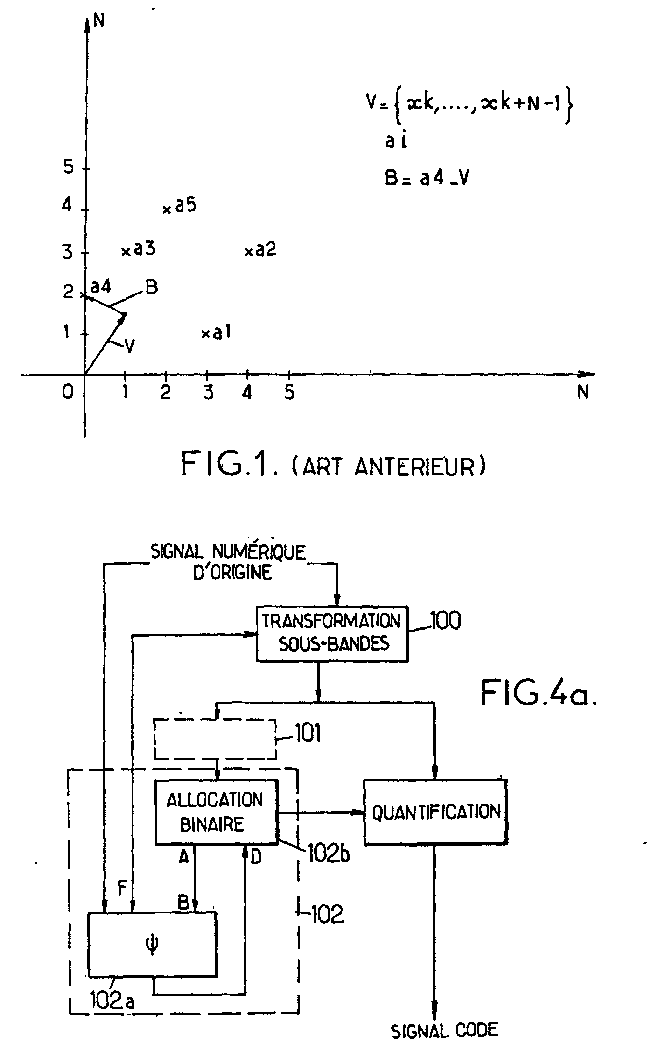

Un tel processus de codage en compression met actuellement en oeuvre une opération de quantification, ayant pour objet de faire correspondre à un groupe ou ensemble de valeurs d'entrée ou échantillons du signal d'origine, numérique, un autre groupe de valeurs, représenté parmi un ensemble de valeurs discrètes. La quantification peut être scalaire ou vectorielle ainsi que représenté en figure 1. Ainsi, pour un groupe de valeurs d'entrée, tel qu'une trame d'échantillons audio ou vidéo, à tout ensemble ou vecteur d'entrée V de N échantillons $\{x_k, ..., x_{k+N-1}\}$, peut être associé un vecteur arbitraire le plus proche, $a_i$, dans un espace de dimension réduite par exemple, le bruit de quantification correspondant à la différence vectorielle entre ces derniers, $B = a_4 - V$ sur la figure 1. Le vecteur arbitraire est repéré par son index, ce qui permet de réduire, c'est-à-dire compresser, la quantité d'information nécessaire au stockage ou à la transmission de l'information représentée par le vecteur d'entrée.

Deux facteurs essentiels limitent actuellement la qualité de l'exploitation des propriétés psychophysiologiques, soit des propriétés psychoacoustiques respectivement psychovisuelles, des codeurs au niveau de l'allocation binaire.

Les techniques existantes, avant tout développées dans le domaine psychoacoustique, font appel à la mise en oeuvre de bancs de filtres nécessitant une grande sélectivité fréquentielle. La première limitation de la qualité d'exploitation précitée résulte donc du choix des bancs de filtres mis en oeuvre. Si l'on souhaite utiliser d'autres bancs de filtres, tels que par exemple des filtres moins sélectifs ou des filtres d'analyse-reconstruction à reconstruction imparfaite, les techniques d'allocation binaire existantes exploitent très mal les propriétés psychophysiques du récepteur, c'est-à-dire les propriétés psychoacoustiques de l'oreille. Ce type de technique a été décrit dans le texte de normalisation ISO/MPEG 1 - Audio 11172-3. La technique d'allocation binaire précitée est souvent présentée comme consistant à négliger, dans la quantification d'une sous-bande, le bruit injecté dans cette sous-bande par les sous-bandes adjacentes. Une telle approche n'est toutefois pas réaliste, car si le bruit injecté dans les sous-bandes au-delà des sous-bandes adjacentes peut être considéré comme négligeable, car les filtres sont extrêmement sélectifs, la contribution effective des bandes adjacentes ne peut en aucun cas être négligée.

En pratique, l'allocation binaire s'appuie sur le calcul pour chaque sous-bande d'un seuil de masquage, seuil obtenu en général en prenant le minimum de la courbe de masquage sur un intervalle fréquentiel. Dans le cas de filtres idéalement sélectifs, le minimum peut être pris sur la bande de fréquences nominale du filtre, par exemple minimum sur 16 raies si le banc de filtres comprend 32 bandes et 512 raies fréquentielles. En pratique, il faut toutefois considérer tout le support du banc de filtres, soit 32 raies par exemple. Dans le cas où le minimum est atteint pour deux bandes adjacentes pour la même raie fréquentielle, les contributions des deux bandes adjacentes correspondent à la puissance maximale admissible, mais sont atténuées par les réponses en fréquence des deux filtres de synthèse. Dans une hypothèse d'indépendance du bruit, il est possible d'additionner les deux termes. La propriété de reconstruction parfaite ou quasi-parfaite du banc de filtres permet de montrer que la puissance de bruit résultante, pour cette raie fréquentielle, est précisément la puissance de bruit injectable. Du point de vue du fait que la contrainte puisse n'être pas satisfaite, c'est le pire cas, sachant que dans d'autres configurations cette technique d'allocation binaire peut s'avérer trop prudente.

La technique précitée n'est donc efficace qu'à condition que le banc de filtres soit à reconstruction parfaite et que les filtres de synthèse aient des comportements particuliers.

Une seconde limitation résulte en outre de l'utilisation d'une courbe de masquage dans le domaine énergie/ fréquence. Une telle courbe de masquage vise en fait à introduire une modélisation du récepteur, en l'occurrence de l'oreille. Dans le cas du codage audionumérique, en particulier, les propriétés psychoacoustiques sont caractérisées par cette courbe de masquage, laquelle décrit, à partir du signal d'origine, le niveau de bruit de codage en fonction de la fréquence que l'on peut admettre sans dégrader la qualité du signal reconstruit. Le problème à résoudre est alors celui d'une optimisation sous contrainte, la courbe de masquage pilotant l'allocation binaire, soit en constituant une contrainte lorsque le codeur fonctionne à débit variable, soit en définissant la fonction à minimiser, lorsque le codeur fonctionne à débit fixe.

Toutes les techniques d'allocation binaire existantes s'appuient en fait sur l'hypothèse d'une mise en oeuvre de filtres d'analyse-synthèse idéaux ou possédant à tout le moins des caractéristiques spectrales particulières. En particulier, dans les techniques précitées, on ne considère que la contribution du filtre de synthèse qui a vocation à reconstruire la composante du signal correspondant à cette bande de fréquences. Ces techniques ont été décrites dans les articles intitulés *Subband Coding of Digital Audio signais* par R.N.J VELDHUIS, M.BREEUWER et R.G.VAN DER WAAL, Philips Research Laboratories, P.O. Box 80000, 5600 IA Eindhoven, The Netherlands, Philips J.Res.44, 329-343 1989, et *Optimal Bit Allocation for MPEG Audio Standard using the Generalized BFOS Algorithm,* D.GARRIDO et S.RAO, IBM T.J. Watson Research Center, New-York, USA, 98è Convention 1995, Février 25-28 PARIS Audio Engineering Society Preprint. En pratique, il est toutefois manifeste que les filtres adjacents injectent également du bruit dans la bande de fréquences précitée. Il est donc nécessaire d'anticiper, dans l'injection de bruit, les biais dûs au fait que les filtres ne sont pas idéaux et ont en particulier une contribution non idéale dans la bande de transition. Cette modélisation est toutefois grossière, dans la mesure où elle ne permet pas de prendre totalement en compte le produit de convolution effectué par les filtres du récepteur, tels que les filtres acoustiques de l'oreille. Une amélioration du processus d'allocation binaire pourrait être envisagée par la mise en oeuvre d'un tel processus d'allocation, non dans le domaine fréquentiel, auquel une correction par l'intermédiaire d'une courbe de masquage est actuellement introduite, mais dans le domaine perceptif, domaine de sensibilité physiologique du récepteur auditif ou visuel considéré. Toutefois, les techniques d'allocation binaire existant actuellement ne fonctionnent que lorsque celles-ci sont conduites dans le domaine fréquentiel.

La présente invention a pour objet de remédier aux inconvénients précités par la mise en oeuvre d'un procédé et d'un dispositif de codage en compression d'un signal numérique, de type audio ou vidéo, dans lequel un processus d'allocation binaire spécifique est susceptible d'être mis en oeuvre lors de l'utilisation d'un banc de filtre d'analyse, ou de synthèse, de type quelconque.

Un autre objet de la présente invention est la mise en oeuvre d'un procédé et d'un dispositif de codage en compression d'un signal numérique de type audio ou vidéo dans lesquels le processus d'allocation binaire est piloté dans le domaine perceptif du récepteur, tout pilotage à partir d'une courbe de masquage dans le domaine fréquentiel étant alors supprimé.

Un autre objet de la présente invention est en conséquence, grâce à la mise en oeuvre d'un processus d'allocation binaire piloté dans le domaine perceptif du récepteur, la mise en oeuvre d'un procédé et d'un dispositif de codage en compression d'un signal numérique, de type audio ou vidéo, dans lequel le récepteur est modélisé par un module psychophysique beaucoup plus fin que les courbes de masquage utilisées actuellement.

Le dispositif et le procédé de codage en compression d'un signal numérique, avec contrôle de reconstruction finale, objets de la présente invention, dans lesquels un signal numérique d'origine, constitué par une succession de trames d'échantillons, est soumis à une décomposition en sous-bandes de fréquences constituant des sous-signaux, et, pour chaque sous-signal, à un processus d'allocation binaire puis de quantification en fonction de cette allocation, pour engendrer un signal numérique codé, sont remarquables en ce que celui-ci permet de, respectivement consiste à effectuer une estimation de la différence entre le signal d'origine et le signal numérique codé-décodé estimé, cette différence étant fonction de l'erreur de filtrage de décomposition en sous-bandes et de l'erreur de quantification pour une pluralité de quantificateurs dans chaque sous-signal, et, une allocation binaire itérative permettant sur critère de contrainte de distance entre le signal numérique codé-décodé estimé et le signal d'origine, respectivement contrainte de débit de codage et calcul de l'erreur totale de codage, pour un quantificateur courant et un quantificateur voisin de cette pluralité de quantificateurs, l'attribution d'un quantificateur optimum.

Le procédé et le dispositif de codage en compression d'un signal numérique trouvent application au stockage et à la transmission de données numériques représentatives d'informations audio et/ou vidéofréquences, notamment de programmes radiodiffusés, respectivement télédiffusés.

Ils seront mieux compris à la lecture de la description et à l'observation des dessins dans lesquels, outre la figure 1 relative aux techniques de quantification actuellement connues et utilisées,

- la figure 2 représente un organigramme général du procédé de codage en compression d'un signal numérique objet de la présente invention ;
- la figure 3a représente un organigramme détaillé d'un premier mode de réalisation du procédé de codage en compression d'un signal numérique objet de la présente invention, avec contrôle de l'erreur finale de reconstruction dans le domaine fréquentiel, dans le cas d'un débit de codage variable ;
- la figure 3b représente un organigramme spécifique d'une variante de mise en oeuvre du premier mode de réalisation du procédé de codage en compression d'un signal numérique objet de la présente invention, dans le cas d'un débit de codage fixe ;

- la figure 4a représente un schéma synoptique illustratif de mise en oeuvre, dans un deuxième mode de réalisation, du procédé de codage en compression d'un signal numérique objet de la présente invention, avec contrôle de l'erreur de reconstruction dans le domaine perceptif, le domaine perceptif étant défini au moyen d'un module psychophysique permettant d'interpréter le signal numérique d'origine ;
- la figure 4b représente un organigramme détaillé du deuxième mode de réalisation du procédé objet de la présente invention, tel que représenté en figure 4a, dans le cas d'un codage en compression à débit variable ;
- la figure 4c représente un organigramme spécifique d'une variante de mise en oeuvre du deuxième mode de réalisation du procédé de codage en compression d'un signal numérique objet de la présente invention, dans le cas d'un débit de codage fixe ;
- les figures 4d et 4e représentent un détail de mise en oeuvre du module psychophysique utilisé pour la mise en oeuvre du procédé objet de la présente invention lorsque celui-ci est destiné au codage en compression de signaux audiofréquence, le module étant un module psychoacoustique représentatif de l'oreille humaine respectivement destiné au codage en compression de signaux vidéofréquence, images fixes ou mobiles, le module étant un module psychovisuel représentatif de l'ensemble formé par l'oeil et le nerf optique humain ;
- la figure 5a représente un schéma synoptique d'un dispositif de codage en compression d'un signal numérique conformément au premier mode de mise en oeuvre du procédé objet de la présente invention ;
- la figure 5b représente un schéma synoptique d'un dispositif de codage en compression d'un signal numérique conformément au deuxième mode de mise en oeuvre du procédé objet de la présente invention dans le domaine perceptif ;
- la figure 5c représente la fonction de transfert d'un banc de filtres d'analyse.

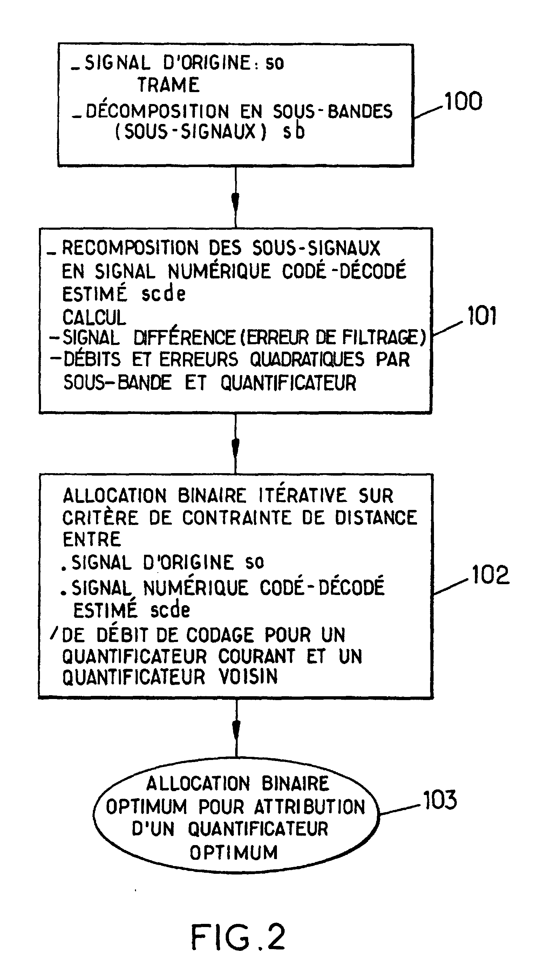

Une description plus détaillée du procédé de codage en compression d'un signal numérique, avec contrôle de l'erreur de reconstruction finale, conforme à l'objet de la présente invention sera maintenant donnée en liaison avec la figure 2.

D'une manière générale, on indique que le procédé de codage en compression d'un signal numérique objet de la présente invention peut être appliqué à des valeurs numériques ou signaux de type audiofréquence et/ou de type vidéofréquence, en particulier d'images fixes ou le cas échéant d'images mobiles de télévision par exemple. Dans tous les cas, ces signaux sont constitués par une succession de trames d'échantillons, le signal numérique d'origine étant désigné par signal d'origine, référencé so.

Dans son mode de mise en oeuvre le plus général, le procédé de codage en compression de la présente invention comprend, à partir du signal d'origine so, constitué en trames, une étape de décomposition en sous-bandes de fréquences, chaque sous-bande constituant un sous-signal étant notée sb. L'étape de décomposition en sous-bandes à partir du signal d'origine so porte la référence 100 sur la figure 2.

Conformément à un aspect classique du codage en compression d'un signal numérique, le procédé objet de la présente invention consiste, en des étapes non représentées sur la figure 2 pour chaque sous-signal sb, à effectuer un processus d'allocation binaire de quantification en fonction de cette allocation pour engendrer le signal numérique codé sc, lequel bien entendu est destiné à être stocké ou, le cas échéant, transmis par des moyens appropriés.

On comprend ainsi que le processus de codage en compression proprement dit consiste à piloter le processus de quantification grâce au processus d'allocation binaire, le processus d'allocation binaire proprement dit, conformément au procédé de codage en compression d'un signal numérique objet de la présente invention, faisant l'objet de mesures spécifiques, plus précisément représentées en figure 2.

Selon un aspect particulièrement remarquable du procédé de codage en compression, objet de la présente invention, celui-ci, afin d'assurer le processus d'allocation binaire précité et piloter ainsi le processus de quantification proprement dit, comporte au moins les étapes telles que représentées en figure 2.

Ces étapes consistent à effectuer en 101 une estimation de la différence entre le signal d'origine so et un signal numérique codé/décodé estimé, noté scde, cette différence estimée étant, conformément à un aspect remarquable du procédé objet de la présente invention, fonction de l'erreur de filtrage et de décomposition en sous-bandes et de l'erreur de quantification engendrée en fait par le processus de choix et d'attribution d'un quantificateur, à partir d'une pluralité de quantificateurs, dans chaque sous-signal.

Ainsi qu'on pourra l'observer à l'étape 101 de la figure 2, on indique que l'erreur de filtrage de décomposition en sous-bande est évaluée à partir d'une recomposition des sous-signaux ou sous-bandes sb en un signal numérique codé/décodé estimé, noté scde, précédemment cité. L'étape d'estimation précitée en 101 permet effectivement d'obtenir une différence estimée entre le signal d'origine so et le signal numérique codé/décodé estimé obtenu par recomposition des sous-signaux ou sous-bandes sb. On comprend ainsi que la composition de l'erreur de filtrage de décomposition en sous-bande et de l'erreur de quantification pour une pluralité de quantificateurs, dans chaque sous-signal, est susceptible de permettre, conformément à un aspect particulièrement avantageux du procédé de codage en compression objet de la présente invention, la conduite d'une allocation binaire optimale, laquelle sera décrite en liaison avec l'étape 102 de la figure 2.

Conformément à l'étape 102 précitée, le processus d'allocation binaire du procédé de codage en compression d'un signal numérique objet de la présente invention consiste à effectuer une allocation binaire itérative permettant, sur critères de contrainte de distance entre le signal numérique codé/décodé estimé précité, scde, et le signal d'origine so, ainsi que le cas échéant sur critère de contrainte de débit de codage et de calcul de l'erreur totale de codage pour un quantificateur courant et un quantificateur voisin de ce quantificateur courant, parmi une pluralité de quantificateurs, d'attribuer un quantificateur optimum en une étape 103 pour une trame d'échantillons considérée.

D'une manière générale, on indique que l'obtention d'une allocation binaire optimum par attribution d'un quantificateur optimum, résultat obtenu grâce à la mise en oeuvre du procédé de codage en compression d'un signal numérique objet de la présente invention, peut être obtenue soit à débit de codage variable, le choix des quantificateurs étant effectué en minimisant le débit sous une contrainte exprimée à partir de l'erreur de reconstruction, soit à débit constant, le choix des quantificateurs étant effectué par minimisation d'une fonction prenant en compte l'erreur de reconstruction sous la contrainte de débit, ainsi qu'il sera décrit ultérieurement dans la description.

Selon un aspect plus particulièrement avantageux du procédé de codage en compression d'un signal numérique objet de la présente invention, ce procédé peut être mis en oeuvre dans un premier mode de réalisation dans le domaine fréquentiel, l'allocation binaire itérative étant réalisée sur critère de contrainte de distance dans le domaine fréquentiel précité ou dans un domaine dit perceptif. Une pluralité de valeurs perceptives représentatives de l'effet physiologique produit par le signal d'origine so et par le signal numérique codé/décodé estimé perçu sont établies, ces valeurs perceptives représentant le domaine perceptif, l'allocation binaire itérative étant, dans ce deuxième mode de réalisation réalisée sur critère de contrainte de distance dans ce domaine perceptif.

Dans tous les cas, premier ou deuxième mode de réalisation du procédé de codage en compression d'un signal numérique objet de la présente invention, le signal d'origine est toutefois soumis à une décomposition en sous-bandes ainsi qu'il sera décrit ultérieurement dans la description.

Un justificatif théorique de l'ensemble du procédé de codage en compression d'un signal numérique tel que décrit en relation avec la figure 2 sera maintenant donné ci-après.

Le mode opératoire décrit en relation avec la figure précitée permet de réaliser un processus d'allocation binaire efficace quels que soient les bancs de filtres utilisés, afin de minimiser le débit de transmission ou de stockage sous la contrainte que le spectre de l'erreur de reconstruction du signal codé soit situé en dessous d'une courbe ou loi de contrainte ou de masquage correspondant à une interprétation du signal d'origine.

De manière plus précise, une transformation linéaire dite transformée d'analyse permet de décomposer le signal d'origine so en plusieurs sous-signaux ou sous-bandes sb correspondant essentiellement à l'information contenue dans une bande de fréquences du signal de départ, le signal d'origine so.

Pour une trame du signal d'origine donnée, une pluralité de quantificateurs sont possibles pour chaque sous-bande sb et le problème de l'allocation binaire consiste alors à choisir la meilleure combinaison de quantificateurs, à raison d'un quantificateur pour chaque sous-signal.

On rappelle que d'une manière générale, le problème de l'allocation binaire consiste soit à minimiser le débit pour une qualité donnée, qualité de reconstruction du signal d'origine, soit au contraire à maximiser la qualité du signal reconstruit sous une contrainte de débit déterminé.

Dans le cas du codage en compression d'un signal audionumérique par exemple, les termes de qualité du signal reconstruit peuvent être définis en termes de spectre de fréquences de l'erreur de reconstruction. On dispose alors d'une courbe dite courbe psychoacoustique ou courbe de masquage représentative du bruit injectable maximum admissible. Pour le calcul d'une telle courbe de masquage, on pourra par exemple se reporter au document et spécifications ISO/MPEG1-Audio, 11172-3.

Ainsi, dans le cas du codage d'un signal audionumérique et pour une qualité de reconstruction, c'est-à-dire une distance perceptive fixée, on cherche à minimiser le débit pour chaque trame, sous la contrainte consistant à placer l'erreur de reconstruction précitée sous la courbe de contrainte précédemment mentionnée. Au contraire, pour un codage à débit fixé, la contrainte consiste à imposer le fait que l'erreur de reconstruction dépasse le moins possible la courbe de masquage. Plusieurs mesures du dépassement peuvent être prises en compte, telles que par exemple la fréquence pour laquelle le dépassement maximal est atteint. On cherche alors à minimiser l'amplitude de ce dépassement maximum ou on cherche à minimiser l'aire correspondant au dépassement. Pour cette dernière possibilité, on pourra se reporter utilement à l'article publié par D. Garrido et S. Rao intitulé "Optimal bit allocation for MPEG Audio Standard using the generalized BFOS algorithm" précédemment cité.

Quel que soit le processus de mesure du dépassement utilisé, le contrôle de l'erreur dans le domaine fréquentiel se traduit alors par un critère d'optimisation ou une contrainte sur le spectre du signal reconstruit, noté Y, et sur le spectre du signal d'origine, noté X, Y et X désignant, bien entendu, le spectre de ces signaux pour la trame considérée. Pour une fonction de contrainte notée $J(Y - X)$ et dans le cas d'un débit variable, cette fonction de contrainte s'écrit :

$$J_o(Y-X) < 0$$

avec

$$J_o(Y-X) = \max_f \left( \left| Y(e^{2\pi jf}) - X(e^{2\pi jf}) \right|^2 - \psi(e^{2\pi jf}) \right) \qquad (1)$$

Dans cette relation, le terme $\psi(e^{2\pi jf})$ représente la courbe de masquage précitée et *f* représente la fréquence d'une raie de fréquence contenue dans la sous-bande considérée, max désignant la valeur maximum.

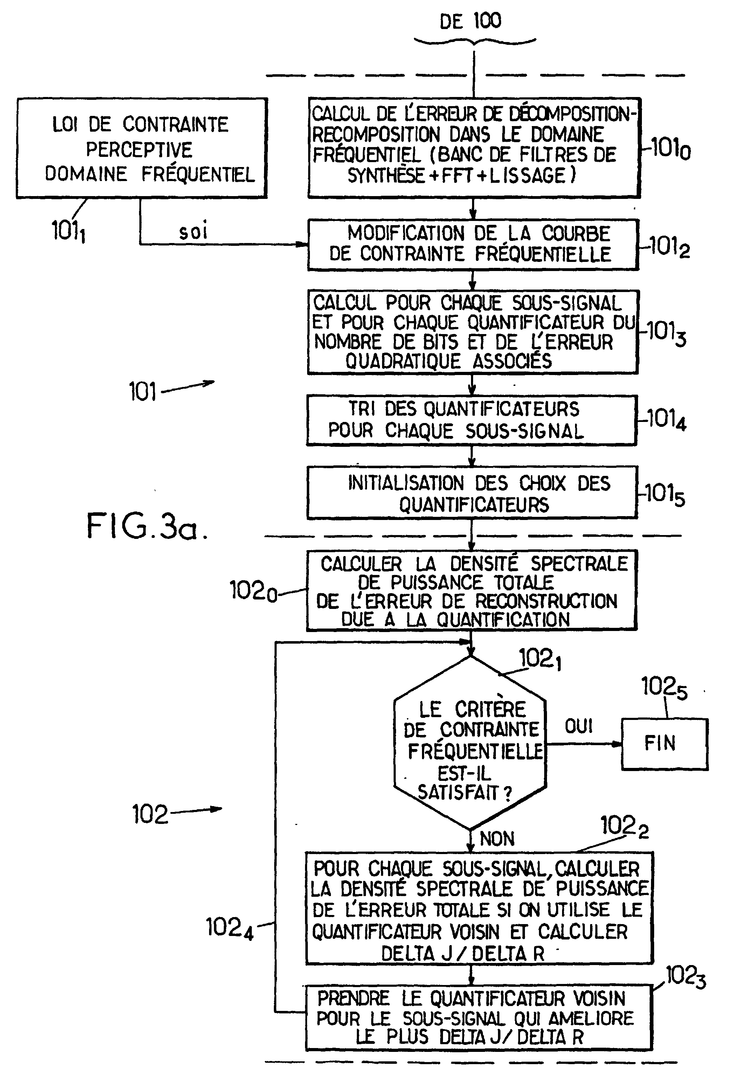

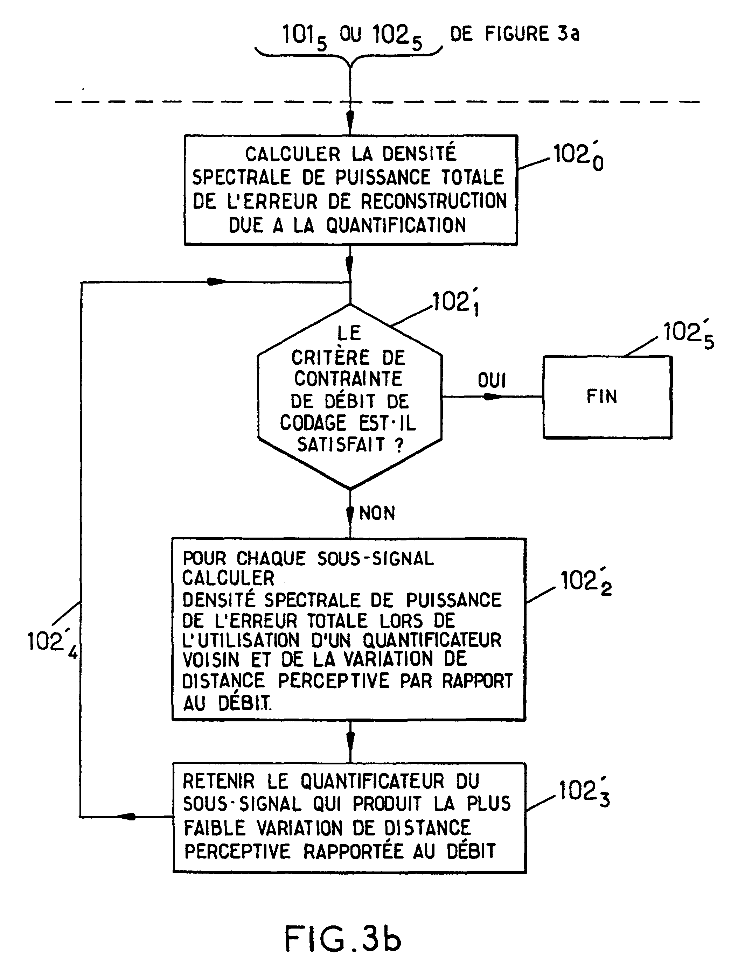

En ce qui concerne l'étape 102 en figure 2 et 3a relative à l'allocation binaire itérative proprement dite, la mise en oeuvre de cette étape peut être justifiée au plan théorique par le fait que le procédé de codage en compression objet de la présente invention s'applique pour des systèmes de décodage dans lesquels le signal reconstruit est synthétisé à partir des sous-signaux ou sous-bandes sb par une succession d'opérations de type filtrage ou sur-échantillonnage au moyen de filtres simples ou itérés par exemple.

Le principe de base du processus d'allocation binaire itérative consiste alors à calculer la fonction de transfert des contributions pour chacune des sous-bandes sb, le signal reconstruit l'étant comme la somme de ces différentes contributions.

Pour un spectre de fréquences du signal reconstruit Y pour la trame considérée et pour un spectre $\hat{X}$ du signal qui serait reconstruit en l'absence de quantification pour cette même trame, le spectre du signal d'erreur est donné par la relation, dans le cas où le système d'analyse-synthèse utilisé n'est pas à reconstruction parfaite :

$$\hat{X}(e^{2\pi jf}) - Y(e^{2\pi jf}) = \sum_{k=1}^{M} W_k(e^{2\pi jD_kf}) G_k(e^{2\pi jf}) \qquad (2)$$

Dans la relation 2 précitée, $D_k$ représente un sur-échantillonage dans la sous-bande de fréquence de rang k correspondant et $G_k$ représente un filtrage pour la sous-bande ou le sous-signal de rang k correspondant, $W_k$ représente le bruit de quantification dans la sous-bande ou le sous-signal correspondant.

L'expression de la relation 2 précédente dans le domaine des puissances du signal reconstruit et du signal reconstruit en l'absence de quantification compte tenu d'une hypothèse d'indépendance du bruit entre les différentes sous-bandes ou sous-signaux de rang k et d'une hypothèse d'indépendance entre le bruit et le signal s'écrit :

$$\left| Y(e^{2\pi jf}) - X(e^{2\pi jf}) \right|^2 =$$

$$\sum_{k=1}^{M} \left| W_k(e^{2\pi jD_kf}) \right|^2 \left| G_k(e^{2\pi jf}) \right|^2 + \left| \hat{X}(e^{2\pi jf}) - X(e^{2\pi jf}) \right|^2 \qquad (3)$$

La relation 3 précédente donne l'expression de la densité spectrale de puissance totale de l'erreur de reconstruction due à la quantification.

Le processus d'allocation binaire proprement dit, tel que représenté en figure 2, consiste alors à exploiter la relation 3 précédente entre l'erreur de reconstruction et les erreurs de quantification dans chacune des sous-bandes ou sous-signaux sb pour chaque trame successive pour effectuer l'allocation binaire proprement dite afin que le processus d'allocation suive de façon fine la courbe de contrainte précédemment établie.

Le terme correspondant à l'erreur de filtrage, c'est-à-dire de décomposition-recomposition en fréquences étant calculé une fois pour toutes, ce terme étant pris en compte, l'estimation du bruit injecté pour différents choix de quantificateurs parmi l'ensemble des quantificateurs disponibles est alors très simple et le processus d'allocation binaire proprement dit représenté en figure 2 et 3a est rapide pour des filtres d'analyse respectivement de synthèse utilisés présentant des formes fréquentielles quelconques.

Par filtres ayant des formes fréquentielles quelconques, on entend la mise en oeuvre de bancs de filtres dont les filtres permettent de réaliser un pavage sur un domaine fréquentiel tel que les sous-bandes de fréquences couvrant ce domaine fréquentiel sont telles que 50% au moins de l'énergie de chaque filtre constituant les bancs de filtres soit situé dans chaque sous-bande de fréquences considérée. Bien entendu, le procédé de codage en compression d'un signal numérique objet de la présente invention peut également être mis en oeuvre à partir de bancs de filtres d'analyse et de synthèse pour lesquels l'opération de filtrage se réduit sensiblement à un retard pur apporté sur les signaux, le signal d'erreur de filtrage dû à la décomposition-recomposition en fréquence étant alors, dans un tel cas, sensiblement négligeable. Dans ce dernier cas, l'opération de calcul de distance perceptive de l'étape 102 de l'allocation binaire itérative se réduit sensiblement à la prise en compte de la seule erreur de quantification.

D'une manière générale, on indique que le passage d'un codage à qualité constante et à débit variable ainsi que décrit précédemment dans la description à un codage à débit fixe consiste, pour l'essentiel, à remplacer le critère de contrainte fréquentielle par un critère de contrainte de débit spécifique, lequel sera explicité au plan théorique de la manière ci-après.

En référence à la relation 1 précédemment mentionnée dans la description, dans le cas d'un débit fixe, la minimisation porte sur l'un des critères suivants :

$$J_0(Y - X) \tag{4}$$

$$J_1(Y - X) = \tag{5}$$
$$\begin{cases} \int \max [0, |Y(e^{2\pi j f}) - X(e^{2\pi j f})|^2 - \psi(e^{2\pi j f})]df & \text{si ce terme est positif} \\ \int \min [0, |Y(e^{2\pi j f}) - X(e^{2\pi j f})|^2 - \psi(e^{2\pi j f})]df & \text{sinon} \end{cases}$$

Dans les relations 4 et 5 précédentes, on rappelle que les notations correspondent à celles de la relation 1.

Ainsi dans le cas d'un débit fixe, il faut donc minimiser la fonction de contrainte $J_0$ ou $J_1$ sous une contrainte de débit. Un tel mode opératoire correspond à un processus classique et, en particulier dans le cas d'un signal audionumérique, ce mode opératoire correspond à l'interprétation courante de la courbe de masquage.

Toutefois, de manière plus précise, il existe deux points de vue pour effectuer l'analyse du signal d'erreur.

Selon un premier point de vue, il est possible de prendre en considération des modèles, tels que par exemple le bruit de quantification considéré comme un bruit blanc, et il est alors possible de calculer l'erreur de reconstruction résultante. Le calcul de l'erreur porte alors sur le calcul d'une espérance mathématique de cette erreur.

Selon un deuxième point de vue, on peut prendre en considération l'erreur qui se produit pour un signal particulier. L'observation d'une transformée de Fourier telle qu'une transformée de Fourier discrète du signal ou de l'erreur sur une trame montre alors l'existence d'un spectre d'erreur très variable. Dans un tel cas, la loi établie par la courbe de contrainte ne correspond pas à une absence de dépassement de cette courbe de contrainte pour toute raie fréquentielle de la transformée de Fourier. Ces dépassements n'empêchent pas la loi de contrainte précitée d'être satisfaite en raison du fait que le récepteur, en l'occurence l'oreille dans le cas d'un signal audionumérique, n'analyse pas le signal reconstruit avec une très bonne résolution fréquentielle. En effet, les filtrages effectués par le récepteur procèdent en quelque sorte à un moyennage des erreurs par bande de fréquences et l'erreur perçue par ce récepteur est grossièrement une version lissée de la transformée de Fourier du signal d'erreur.

Conformément à un aspect spécifique du procédé de codage en compression d'un signal numérique objet de la présente invention, le signal d'erreur entre le signal d'origine so et le signal codé/décodé estimé scde peut ainsi être traité soit à partir de modèles, soit à partir de lissages ainsi qu'il sera décrit ultérieurement dans la description à partir des deux modes de réalisation du procédé objet de l'invention.

Le processus de lissage précédemment mentionné permet d'une part de lisser l'erreur de décomposition-recomposition en sous-bandes de fréquences dans le cas où le processus d'analyse/synthèse ne reconstruit pas parfaitement le signal et d'autre part, il constitue un moyen de validation permettant de vérifier a posteriori que l'erreur de reconstruction après quantification et synthèse est située en dessous de la courbe de contrainte, ainsi que mentionné précédemment dans la description.

Dans le cas du codage d'un signal audionumérique, par exemple, le moyennage précédemment mentionné est effectué par le récepteur, c'est-à-dire l'oreille humaine, suivant l'échelle des Barks. Pour une définition plus détaillée de l'échelle précitée, on pourra utilement se reporter à l'article publié par Eberhard Zwicker and U. Tilmann Zwicker intitulé "Audio engineering and psychoacoustics : matching signals to the final receiver, the human auditory system" - Institute of Electroacoustics, Technical University, Munich, D-8000 Munchen 2, Germany, publié par le J. Audio Eng. Soc., vol. 39, N° 3, 1991, March, pp. 115-125.

Ainsi, pour une fréquence donnée, il convient alors d'effectuer une moyenne sur un support autour de cette fréquence sur une largeur constante en Barks le long de l'axe fréquentiel. Dans le domaine fréquentiel, une courbe psychoacoustique est ainsi calculée, cette courbe représentant un intermédiaire de calcul approché, permettant de faire le lien entre le domaine perceptif et l'allocation binaire proprement dite. Le lissage par Bark de la transformée de Fourier effectuée remplace grossièrement le modèle d'oreille et permet de réduire les erreurs occasionnées. De manière plus précise, le lissage choisi consiste à recalculer le spectre de l'erreur de décomposition/recomposition en calculant pour chaque raie de la transformée de Fourier précitée la moyenne de la puissance de l'erreur sur une fenêtre de largeur 1 Bark, largeur approximative des filtres auditifs de l'oreille. Ce traitement donne au spectre de l'erreur de reconstruction précitée l'allure régulière qu'en perçoit approximativement l'oreille.

Une description plus détaillée du premier mode de réalisation du procédé de codage en compression d'un signal numérique objet de la présente invention, lorsque celui-ci est mis en oeuvre dans le domaine fréquentiel, sera maintenant donné en liaison avec la figure 3a.

Dans ce premier mode de réalisation, on comprend bien entendu que l'étape 100 de la figure 2 est réalisée préalablement. Toutefois, les étapes 101 et 102 relatives à l'estimation de la différence entre le signal d'origine so et le signal numérique codé/décodé estimé scde et l'étape d'allocation binaire itérative 102 sont alors réalisées de la manière ci-après.

L'étape 101 d'estimation de la différence entre le signal d'origine et le signal numérique codé/décodé estimé scde, pour un contrôle de l'erreur de reconstruction dans le domaine fréquentiel, comprend, ainsi que représenté en figure 3a, les étapes successives consistant en une étape $101_0$ à calculer l'erreur de filtrage engendrée par la décomposition en sous-bandes de fréquences et par la recomposition de ces sous-bandes de fréquences. On comprend que le calcul de cette erreur de filtrage permet de prendre en compte le processus de décomposition en sous-bandes sb du signal d'origine so puis, suite à la transmission ou au stockage des données transmises après codage en compression, de prendre en compte la recomposition de ces données codées pour reconstituer au niveau d'un décodeur par exemple, un signal d'origine reçu ou reconstitué entâché de l'erreur de filtrage de décomposition/recomposition des sous-bandes de fréquences précitées.

Ainsi que représenté sur la figure 3a, on indique que le procédé de codage en compression objet de la présente invention comprend une étape $101_1$ dite d'établissement d'une loi de contrainte perceptive dans le domaine fréquentiel. Cette étape $101_1$ peut être réalisée pour chaque trame du signal d'origine so, soit pour un signal audio, soit pour un signal vidéo ainsi qu'il sera décrit ultérieurement dans la description. L'étape $101_1$ permet, à partir du signal d'origine, et en particulier de chaque trame de celui-ci, d'établir un signal d'origine interprété, noté soi, tenant compte de la perception sensorielle auditive ou visuelle d'un récepteur, l'oreille ou l'oeil humain. Les étapes $101_0$ et $101_1$ précitées sont elles-mêmes suivies d'une étape $101_2$ consistant à calculer, à partir de la loi de contrainte perceptive et de l'erreur de filtrage obtenue à l'étape $101_0$ une contrainte perceptive corrigée. L'étape $101_2$ de calcul de la contrainte perceptive corrigée s'analyse en fait en une modification d'une courbe de contrainte fréquentielle compte tenu de la loi de contrainte perceptive établie pour la trame considérée à l'étape $101_1$ précédente.

L'étape 1012 précédemment mentionnée est alors suivie d'une étape de calcul pour chaque sous-signal, c'est-à-dire chaque sous-bande sb et pour chaque quantificateur $a_i$ disponible pour assurer la quantification, du nombre de bits nécessaires pour transmettre le sous-signal quantifié et de l'erreur quadratique de quantification entre le sous-signal d'origine et le sous-signal quantifié associée à chacun des quantificateurs possibles disponibles pour chaque sous-signal. L'étape $101_3$ précitée est elle-même suivie d'une étape $101_4$ consistant à effectuer un tri des quantificateurs disponibles en fonction de l'erreur quadratique du bruit de quantification engendrée par ces derniers, ce tri des quantificateurs étant effectué pour chaque sous-signal, en raison de la spécificité de chaque quantificateur possible pour un sous-signal ou sous-bande considéré.

Enfin, l'étape $101_4$ est elle-même suivie d'une étape $101_5$ consistant à initialiser le choix d'au moins un quantificateur parmi les quantificateurs triés précédents, cette étape d'initialisation permettant de choisir en fait un quantificateur courant, pour la sous-bande sb considérée lequel permettra ultérieurement de procéder à l'allocation binaire itérative 102 représentée en figure 2 et en figure 3a.

Le processus d'allocation binaire peut alors être réalisé de manière itérative ainsi que représenté à l'étape 102 en figure 3a, dans le cas d'un débit de codage variable.

Il consiste alors en une étape $102_0$ à calculer la densité spectrale de puissance totale de l'erreur de reconstruction due à la quantification puis à soumettre en une étape $102_1$ la densité spectrale de puissance totale de l'erreur de reconstruction calculée précitée à un critère de contrainte fréquentielle, ce critère de contrainte fréquentielle ayant pour objet de placer la densité spectrale de puissance totale de l'erreur de reconstruction calculée sous la valeur de la courbe de contrainte perceptive corrigée obtenue suite à la mise en oeuvre de l'étape $101_2$ précitée.

Sur réponse positive au test de soumission au critère de contrainte fréquentielle précité à l'étape $102_1$, le quantificateur retenu est alors pour chaque sous-signal le quantificateur courant retenu précédemment à l'étape $101_5$, pour la sous-bande considérée.

Au contraire, sur réponse négative au test réalisé à l'étape $102_1$, cette étape est suivie d'une étape $102_2$

consistant à calculer pour chaque sous-signal, c'est-à-dire chaque sous-bande sb, la densité spectrale de puissance de l'erreur totale précédemment citée lors de l'utilisation d'un quantificateur voisin du quantificateur courant, ainsi que le gain de distance perceptive par rapport au débit du codage correspondant.

L'étape $102_2$ est alors suivie d'une étape $102_3$, laquelle consiste à modifier et retenir le quantificateur du sous-signal ou de la sous-bande sb qui conduit à la meilleure amélioration de la distance perceptive rapportée à la variation de débit. L'étape $102_3$ précitée est alors suivie d'un retour par un appel itératif $102_4$ du test $102_1$ de critère de contrainte fréquentielle précédemment cité, compte tenu de la modification du quantificateur du sous-signal qui a conduit à la meilleure amélioration de la distance perceptive rapportée à la variation de débit.

Sur réponse positive au test réalisé à nouveau à l'étape $102_1$, le quantificateur retenu est le quantificateur modifié pré-cité et sur réponse négative au critère de contrainte fréquentielle précité à nouveau réalisé, l'itération est alors poursuivie jusqu'à l'obtention d'une réponse positive ultérieure.

Dans le cas le plus général, c'est-à-dire celui de l'utilisation de filtres quelconques, différents modes de réalisation des étapes successives représentées en figure 3a tant pour ce qui concerne l'étape 101 d'estimation de la différence entre le signal d'origine et le signal numérique codé/décodé estimé que pour l'étape 102 d'allocation binaire itérative proprement dite seront maintenant décrits ci-après.

L'étape $101_2$ de modification de la courbe de contrainte fréquentielle permettant de prendre en compte l'erreur de filtrage décomposition-recomposition des sous-bandes de fréquence, lorsque cette opération ne se réduit pas à un retard pur, est effectuée grâce à une procédure simple consistant à effectuer :

- une recomposition des sous-bandes sb en l'absence de quantification,
- le calcul de l'erreur de reconstruction dû au fait que le processus de décomposition en sous-bandes sb et de recomposition de ces sous-bandes ne sont pas inverses l'un de l'autre, en prenant en compte le retard nominal apporté par la succession de la décomposition et de la recomposition précitées,
- le calcul de la transformée de Fourier grâce à une transformée de Fourier rapide par exemple de ce signal d'erreur de reconstruction,
- soustraction de la densité spectrale de puissance de ce signal d'erreur soumis à un processus de lissage, par exemple, à la courbe de contrainte, c'est-à-dire à la loi de contrainte perceptive dans le domaine fréquentiel établie à l'étape $101_1$ précédemment décrite dans la description.

En ce qui concerne l'étape $101_3$, le calcul pour chaque sous-signal ou sous-bande sb et pour chaque quantificateur disponible du nombre de bits nécessaires afin de transmettre ce sous-signal ou sous-bande sb quantifié avec le quantificateur considéré est effectué ainsi que le calcul de la forme fréquentielle lissée du bruit de quantification engendré par cette opération de quantification. Ainsi l'étape $101_3$ permet, pour chaque quantificateur disponible, pour la sous-bande considérée, de disposer du nombre de bits nécessaires pour la transmission du sous-signal ainsi que de la valeur du bruit de quantification engendré par une opération de quantification utilisant le quantificateur considéré. On dispose à la fin de l'étape $101_3$ d'un ensemble de valeurs correspondantes ev pour chaque sous-signal et chaque quantificateur disponible pour la trame considérée.

En ce qui concerne l'étape $101_4$, le tri des quantificateurs possibles peut être réalisé par l'intermédiaire d'un programme de tri permettant de classer les quantificateurs possibles par ordre d'erreur de quantification croissante par exemple, l'erreur de quantification étant définie comme l'erreur quadratique de quantification. Le tri des quantificateurs possibles est alors effectué en éliminant ensuite les quantificateurs utilisant un plus grand nombre de bits en créant une erreur quadratique plus importante.

Enfin, l'étape $101_5$, initialisation du choix des quantificateurs, est effectuée pour chaque sous-bande ou sous-signal sb sans prendre en compte l'influence des autres sous-bandes. Ainsi, pour chaque sous-signal sb, on retient le quantificateur qui, avec un nombre minimal de bits, permet d'engendrer une erreur de quantification dont la densité spectrale de puissance est en dessous de la courbe de contrainte modifiée obtenue en fin d'étape $101_2$ dans le cas où seul ce sous-signal ou sous-bande serait quantifié.

En ce qui concerne le processus d'allocation binaire itérative proprement dit, le calcul de la densité spectrale de puissance totale de l'erreur de reconstruction à l'étape $102_0$ étant effectué ainsi que décrit précédemment et le critère de contrainte fréquentielle étant appliqué à l'étape $102_1$ ainsi que mentionné précédemment, lors d'une réponse positive au test correspondant, le quantificateur retenu pour la sous-bande est le quantificateur courant retenu lors de l'étape d'initialisation pour la sous-bande considérée sb et bien entendu, la trame correspondante.

Au contraire, dans le cas d'une réponse négative au test précité à l'étape $102_1$, l'étape $102_2$ consiste en fait, pour chaque sous-signal ou sous-bande sb et pour la trame considérée, à calculer la densité spectrale de puissance de l'erreur totale lorsque l'on change le quantificateur courant retenu à l'étape d'initialisation $101_5$ "ab initio" pour cette sous-bande sb par un quantificateur voisin de ce quantificateur courant. On indique qu'afin de mettre en oeuvre le procédé objet de la présente invention et plus particulièrement le processus d'allocation binaire itérative dans le cas d'un débit variable pour une qualité constante, c'est-à-dire une distance perceptive correspondant à une erreur minimale par rapport à la courbe de contrainte précédemment citée, le quantificateur voisin choisi est celui comportant par rapport au quantificateur courant le nombre de bits immédiatement supérieur. L'étape $102_2$ comporte également une opération de calcul du gain de la variation de qualité, c'est-à-dire en fait de la variation de contrainte de bruit ou de distance perceptive $\Delta J$ rapportée à la variation de débit $\Delta R$ correspondante du fait du choix de ce quantificateur voisin, l'expression $\Delta J/\Delta R$ étant définie comme la variation marginale de la qualité par rapport au débit.

Enfin, l'étape $102_3$ consiste en fait en une étape de choix consistant à retenir le quantificateur voisin relatif à une sous-bande ou sous-signal considéré, le quantificateur voisin retenu étant celui qui a conduit à la plus forte amélioration de la qualité rapportée au débit. On indique que l'opération de choix réalisée à l'étape $102_3$ est effectuée par une comparaison entre les différentes valeurs de gain ou variations marginales de qualité par rapport au débit de chaque sous-signal ou sous-bande, un seul nouveau quantificateur étant affecté à chaque sous-signal sb.

Dans une variante de réalisation du processus d'allocation binaire tel que décrit en relation avec la figure 3a, on indique que l'étape de calcul de la valeur de gain de la qualité par rapport au débit $\Delta J/\Delta R$ peut être remplacé par le seul calcul de la variation de qualité $\Delta J$, le choix du sous-signal et du quantificateur voisin associé à ce sous-signal étant ensuite effectué pour la meilleure amélioration non plus de la valeur de gain de qualité par rapport au débit mais de la seule qualité.

Une description plus détaillée du processus d'allocation binaire itérative, c'est-à-dire de l'étape 102 précédemment décrite en liaison avec la figure 3a, dans le cas d'un débit variable, sera maintenant donnée en liaison avec la figure 3 b, dans le cas où, au contraire, le débit de codage est fixe.

Ainsi qu'on l'observera en outre sur la figure 3b, dans le cas d'un débit fixe, l'étape 102 comporte de la même manière que dans le cas de la figure 3a une étape $102'_0$ consistant à calculer la densité spectrale de puissance totale de l'erreur de reconstruction due à la quantification.

D'une manière non limitative, on indique que l'étape précitée peut être mise en oeuvre soit suite à la mise en oeuvre de l'étape $101_5$ de la figure 3a, c'est-à-dire indépendamment de toute contrainte de qualité ainsi que décrit précédemment en liaison avec cette figure, soit au contraire après mise en oeuvre du processus d'allocation binaire itérative 102 représentée en figure 3a, c'est-à-dire après réponse positive en $102_5$ au test $102_1$ de la figure 3a, c'est-à-dire à partir de la solution issue de l'allocation binaire optimale en débit variable. La mise en oeuvre de l'une ou l'autre des alternatives est indifférente dans le cadre du procédé de codage par compression d'un signal numérique objet de la présente invention.

L'étape $102'_0$ est suivie d'une étape de test $102'_1$ visant à vérifier que le critère de contrainte de débit de codage est ou non satisfait, cette contrainte de débit correspondant aux relations 4 et 5 précédemment mentionnées dans la description. Sur réponse positive au test précité $102'_1$, le quantificateur choisi pour la sous-bande considérée et la trame correspondante est celui correspondant à l'étape $101_5$, par exemple de l'initialisation du choix des quantificateurs, c'est-à-dire du quantificateur courant.

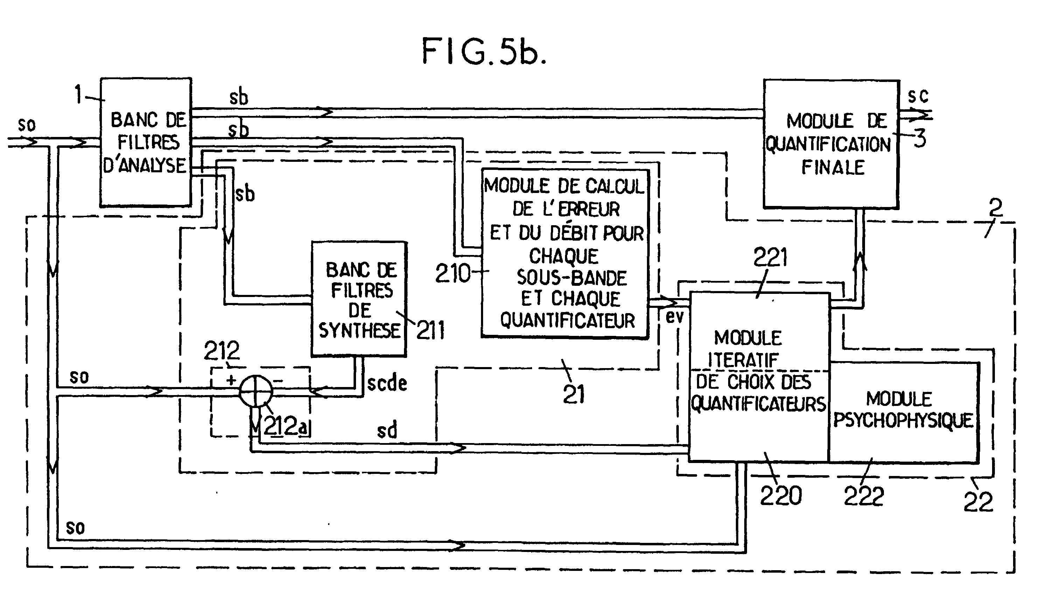

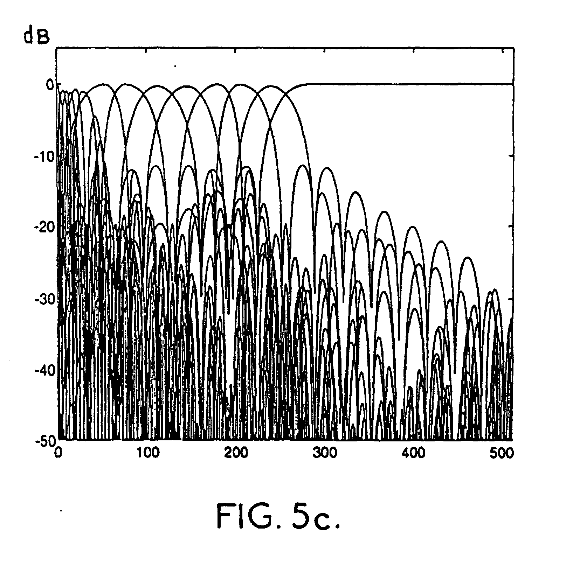

Sur réponse négative au test $102_1$ représentée en figure 5b, une étape $102'_2$ est prévue, laquelle consiste pour chaque sous-signal à calculer la densité spectrale de puissance de l'erreur totale lorsqu'on change le quantificateur courant pour la sous-bande considérée et la trame correspondante par un quantificateur voisin, le calcul de variation marginale de la qualité par rapport au débit $\Delta J/\Delta R$ étant également effectué. On indique toutefois que contrairement au mode opératoire de la figure 3a, le quantificateur voisin du quantificateur courant est celui qui comprend le nombre de bits immédiatement inférieur à celui du quantificateur courant. L'étape $102'_2$ est alors suivie d'une étape $102'_3$ consistant à modifier et retenir le quantificateur du sous-signal ou de la sous-bande correspondante parmi la pluralité de quantificateurs qui a conduit en fait à la plus faible diminution de la qualité, c'est-à-dire de la distance perceptive rapportée au débit. L'appel itératif de ce quantificateur voisin, et représenté par $102'_4$, permet de soumettre à nouveau la densité spectrale de puissance totale de l'erreur de reconstruction calculée pour ce quantificateur voisin retenu au critère de contrainte de débit par le test $102'_1$.

Le procédé de codage en compression d'un signal numérique objet de la présente invention, précédemment décrit en liaison avec les figures 3a et 3b dans le premier mode de réalisation de ce dernier, est entièrement basé sur la courbe de contrainte psychophysique, en particulier psychoacoustique, engendrée à l'étape $101_1$. Cette courbe de contrainte indique pour chaque fréquence la densité de bruit maximale autorisée et elle apparaît ainsi comme un intermédiaire de calcul permettant de séparer l'interprétation du signal d'origine so pour délivrer un signal d'origine interprété de l'allocation binaire proprement dite. Ainsi, le modèle psychophysique et le processus d'allocation binaire sont sensiblement indépendants et il est possible, en conséquence, de remplacer un modèle psychophysique par un autre ou une allocation binaire par une autre, soit sous contrainte de qualité ainsi que décrit précédemment, soit sous contrainte de débit. Dans le cas d'un signal audionumérique, par exemple, les modèles psychoacoustiques normalisés par la norme ISO/MPEG-1 Audio, 11172-3, précédemment citée, peuvent être utilisés.

Toutefois, le procédé de codage en compression d'un signal numérique dans le domaine fréquentiel tel que décrit en liaison avec la figure 3a et/ou 3b est sous-optimal pour différentes raisons.

D'une première part, on indique que le calcul d'une courbe de contrainte telle qu'une courbe psychoacoustique, indépendante du banc de filtre d'analyse, respectivement de synthèse, ne peut être qu'approché.

D'une deuxième part, cette courbe de contrainte doit être calculée en principe par déconvolution des filtres auditifs de l'oreille, cette opération étant éminemment complexe et résolue par la théorie des optimisations sous contrainte. En pratique, cette courbe est calculée approximativement sans déconvolution.

D'une manière générale, la technique d'allocation binaire itérative proposée en relation avec la figure 3a, par exemple, conformément au procédé de codage en compression objet de la présente invention, étant déjà une technique d'optimisation sous contrainte, il apparaît donc possible, en regroupant ces techniques, de ne résoudre qu'un seul problème d'optimisation.

C'est l'objet du deuxième mode de réalisation du procédé de codage en compression d'un signal numérique objet de la présente invention dans lequel, selon un aspect particulièrement remarquable de ce deuxième mode de réalisation, une modification de la contrainte d'optimisation, notamment en débit variable, est effectuée.

Dans ce deuxième mode de réalisation et conformément à un aspect particulièrement avantageux du procédé objet de la présente invention, le critère de contrainte appliqué l'est au niveau des sensations perceptives, que ce soit dans le domaine auditif ou visuel. Dans de telles conditions, on indique que le spectre du signal reconstruit Y et le spectre du signal d'origine X doivent être perçus de la même façon par le récepteur humain.

Dans les deux cas, la sensation perceptive, auditive ou visuelle, est alors constituée par un ensemble de grandeurs calculées par un modèle de récepteur, l'oreille ou l'oeil humain. Cet ensemble de valeurs permet de représenter la perception sonore ou visuelle du signal reconstruit, respectivement du signal d'origine au niveau soit du nerf auditif, soit du nerf optique. Dans les deux cas, le procédé objet de la présente invention met alors en oeuvre un modèle psychophysique, lequel sera décrit de manière plus détaillée ultérieurement dans la description dans le cas d'un modèle psychoacoustique, repsectivement d'un modèle psychovisuel.

Il est alors possible soit d'imposer que les sensations perceptives du spectre du signal d'origine X, respectivement du spectre du signal reconstruit Y, soient suffisamment proches, au seuil différentiel de perception près, soit d'imposer que la sensation perceptive du bruit, calculée sur les spectres précités, Y - X, soit inférieure à une courbe dite de contrainte ou de masquage, laquelle peut être calculée à partir de la sensation perceptive du spectre du signal d'origine X.

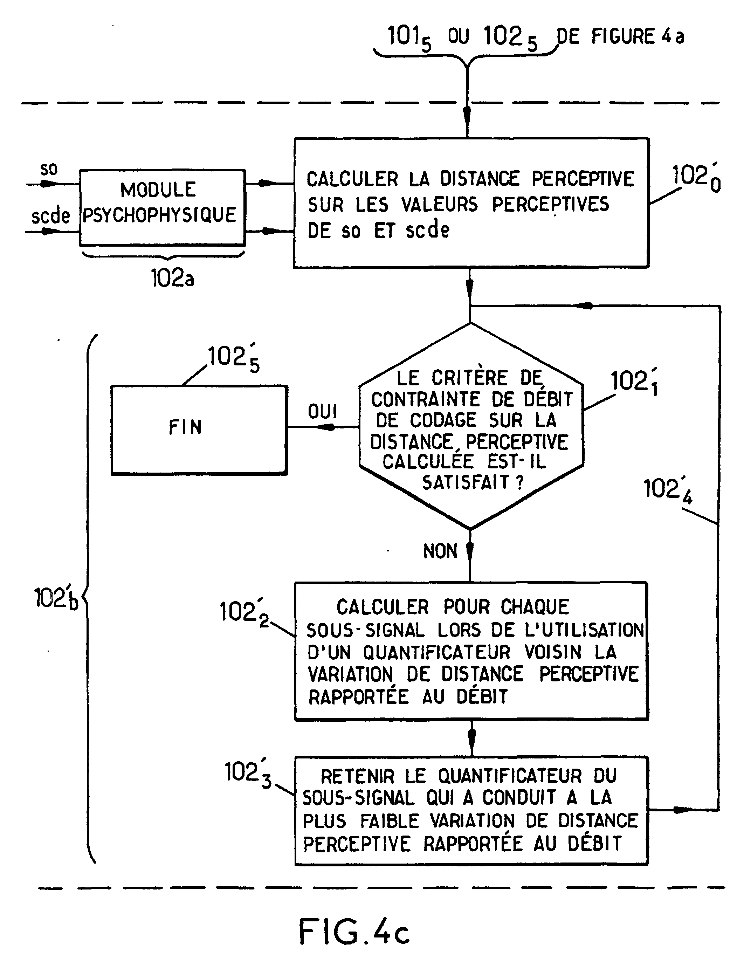

Dans le deuxième mode de réalisation du procédé de codage en compression d'un signal numérique objet de la présente invention, ainsi que représenté en figure 4a sous forme de schéma synoptique, l'allocation binaire itérative est réalisée sur critère de contrainte de distance dans le domaine perceptif.

Dans ce cas, ainsi que représenté sur la figure 4a, l'étape 101 d'estimation de la différence entre le signal d'origine et le signal numérique codé/décodé estimé est simplifiée par rapport au premier mode de réalisation décrit en figure 3a, et établie à partir d'un module psychophysique noté Ψ directement associé au processus d'allocation binaire itératif 102, ce module psychophysique Ψ permettant de réaliser une sous-étape 102a dans laquelle chaque sous-signal sb ou sous-bande de fréquences, ainsi que le signal d'origine so, sont traités par le module psychophysique Ψ. Le module psychoacoustique Ψ permet de calculer une pluralité de valeurs perceptives représentatives de l'effet physiologique produit par le signal d'origine so. Il permet en outre d'estimer une pluralité de valeurs perceptives représentatives de l'effet physiologique du signal numérique codé-décodé estimé. Ces opérations de calcul et d'estimation de ces valeurs perceptives sont réalisées à partir du signal d'origine so, de la différence estimée entre ce signal d'origine et le signal codé-décodé estimé et de l'erreur de quantification de chaque sous-signal. Les valeurs perceptives représentent le domaine perceptif.

Le processus d'allocation binaire proprement dit correspond alors à une étape 102b représentée en figure 4a, laquelle est conduite à partir de l'ensemble de valeurs perceptives représentant le domaine perceptif pour la trame considérée du signal d'origine so et du signal codé/décodé estimé scde. Le processus d'allocation binaire 102 et en particulier le processus d'allocation binaire proprement dit 102b de la figure 4a permet ensuite de piloter la quantification ainsi que décrit précédemment dans la description.

Sur la figure 4a, on indique que le procédé de codage en compression d'un signal numérique objet de la présente invention, dans son deuxième mode de réalisation notamment, se distingue des techniques habituelles, notamment par l'existence de la liaison AB entre l'étape 102a produite par le module psychophysique et le processus d'allocation binaire proprement dit 102b. La liaison AB précitée illustre le caractère itératif du processus d'allocation binaire dans la mesure où, ainsi que décrit précédemment en liaison avec la figure 3a, le module psychoacoustique Ψ est appelé plusieurs fois par le processus d'allocation binaire proprement dit 102b.

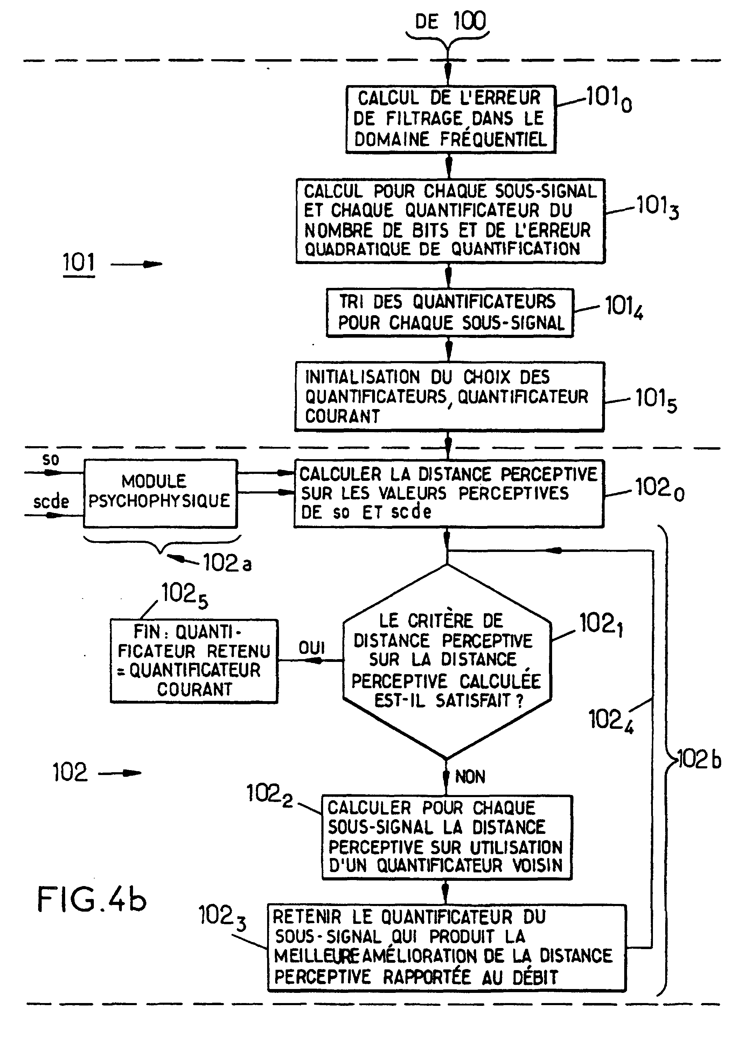

Une description plus détaillée de l'étape 101 d'estimation de la différence entre le signal numérique codé/décodé estimé et le signal d'origine, dans le deuxième mode de réalisation du procédé objet de la présente invention, tel que représenté en figure 4a, sera maintenant donnée en liaison avec la figure 4b.

Selon la figure 4b précitée, l'étape 101, précédemment mentionnée, comprend les étapes successives telles que une étape $101_0$ consistant à calculer l'erreur de filtrage de décomposition et d'analyse des sous-bandes de fréquence, cette étape $101_0$ étant semblable, bien que simplifiée, à l'étape $101_0$ de la figure 3a dans des conditions qui seront décrites ultérieurement dans la description.

L'étape $101_0$ précitée est, pour chaque sous-bande ou signal sb, suivie des étapes successives ci-après :

- $101_3$ consistant à calculer pour chaque quantificateur disponible de la pluralité de quantificateurs le nombre de bits alloués possibles et l'erreur de quantification due au bruit de quantification. L'étape $101_3$ de la figure 4b est semblable à celle de la figure 3a ;
- l'étape $101_3$ précitée est suivie d'une étape $101_4$ consistant à effectuer un tri des quantificateurs en fonction de l'erreur quadratique due au bruit de quantification ;
- enfin, l'étape $101_4$ est elle-même suivie de l'étape $101_5$ consistant à initialiser le choix d'au moins un quantificateur parmi les quantificateurs triés, le quantificateur choisi étant le quantificateur courant.

En ce qui concerne l'étape $101_0$ représentée en figure 4b, on indique que le calcul de l'erreur de filtrage dans le domaine fréquentiel, erreur de décomposition/recomposition en sous-bandes est effectuée en particulier lorsque les bancs de filtres utilisés ne sont pas à reconstruction parfaite. Le calcul est effectué une fois pour toutes, suite à recomposition de l'ensemble des sous-bandes sb en l'absence de quantification, puis calcul de l'erreur de reconstruction due au fait que les systèmes de décomposition et de recomposition ne sont pas inverses l'un de l'autre en prenant en compte le retard nominal de la succession des compositions/recompositions.

L'étape $101_3$ consiste en fait, de manière semblable à l'étape $101_3$ de la figure 3a, pour chaque sous-signal et chaque quantificateur, à calculer le nombre de bits nécessaires pour transmettre ce sous-signal quantifié avec le quantificateur considéré ainsi qu'à calculer l'erreur du bruit de quantification, erreur quadratique engendrée par cette opération.

L'étape $101_4$ est effectuée grâce à un programme de tri des quantificateurs possibles pour chacune des sous-bandes sb. Au cours de cette opération, les quantificateurs possibles sont classés par ordre d'erreur de quantification quadratique engendrée croissante et les quantificateurs qui ont besoin de plus de bit pour créer plus de bruit sont éliminés.

Enfin, en ce qui concerne l'étape $101_5$, l'initialisation du choix des quantificateurs est réalisée pour chaque sous-bande ou sous-signal sb en l'absence de prise en compte de l'influence des autres sous-bandes.

Selon un premier critère d'initialisation, on retient pour chaque sous-signal le quantificateur qui, avec le nombre minimal de bits, transforme le sous-signal en un signal quantifié dont la sensation perceptive est identique au seuil différentiel de perception près.

Selon un deuxième critère d'initialisation, on retient le quantificateur qui, avec le nombre minimal de bits, permet d'engendrer, du fait de la quantification du sous-signal ou sous-bande considéré sb, une erreur perceptivement indétectable en présence du signal d'origine.

Selon les premier et deuxième critères précités, l'on tient compte bien entendu de l'erreur de filtrage calculée à l'étape $101_0$, en ajoutant cette erreur au sous-signal quantifié ou au signal d'erreur. Les deux critères précités permettent d'obtenir un quantificateur courant pour la trame considérée de chaque sous-bande ou sous-signal sb. Dans le deuxième critère précédemment cité, on indique que le critère d'indétectabilité du sous-signal quantifié porte sur les valeurs perceptives du bruit de quantification.

D'une manière générale, on indique également que le procédé de codage en compression d'un signal numérique objet de la présente invention, dans son deuxième mode de réalisation, peut bien entendu être mis en oeuvre à qualité constante, c'est-à-dire à distance perceptive sensiblement constante mais à débit variable ou, au contraire, à débit constant. Dans les deux alternatives précitées, la contrainte appliquée est différente et correspond soit à un critère de distance perceptive sur la distance perceptive calculée pour imposer une contrainte de qualité, soit au contraire à un critère de contrainte de débit ainsi qu'il sera décrit ci-après.

Dans le cas d'un débit de codage variable, à qualité constante, ainsi que représenté en figure 4b, le processus d'allocation binaire 102 comprend, ainsi que représenté en liaison avec la figure 4a, la mise en oeuvre de la sous-étape 102a consistant, grâce au module psychophysique, à transformer le signal d'origine so et le signal codé/décodé estimé scde en l'ensemble de valeurs perceptives précédemment citées. On indique que cette opération est réalisée pour chaque trame de chaque sous-bande ou sous-signal sb.

L'étape 102 d'allocation binaire itérative comprend également la sous-étape 102b précédemment mentionnée dans la description, laquelle consiste, ainsi que représenté en figure 4b, en une étape $102_0$ consistant à calculer sur les valeurs perceptives, c'est-à-dire sur l'ensemble des valeurs relatives au signal d'origine so et scde, la distance perceptive entre le signal d'origine et le signal reconstruit après quantification, compte tenu de l'erreur de filtrage de décomposition/recomposition des signaux en sous-bandes.

L'étape $102_0$ précitée, elle-même suivie d'une étape $102_1$, consistant à soumettre la distance perceptive calculée, à un critère de distance perceptive. D'une manière générale, on indique que le critère de distance perceptive peut consister en un simple critère de différence ou d'erreur entre valeurs perceptives homologues du signal d'origine et du signal codé/décodé estimé scde. Il peut également porter sur une combinaison linéaire de ces valeurs homologues, par exemple.

Sur réponse positive au critère de distance effectué par un test à l'étape $102_1$ précitée, le quantificateur retenu pour le sous-signal ou la sous-bande considérée et la trame correspondante est le quantificateur courant obtenu à l'étape d'initialisation $101_5$ précédemment mentionnée.

Au contraire, sur réponse négative au test réalisé à l'étape $102_1$, cette étape est suivie d'une étape $102_2$ consistant à calculer pour chaque signal ou sous-bande sb la distance perceptive, sur utilisation d'un quantificateur voisin du quantificateur courant. L'étape $102_2$ consiste également à calculer le gain de distance perceptive rapporté au débit. D'une manière plus précise, on indique qu'à l'étape $102_2$, le quantificateur voisin choisi est le quantificateur comportant le nombre de bits immédiatement supérieur à celui du quantificateur courant. En outre, le gain de distance perceptive rapporté au débit est le gain $\Delta J_0/\Delta R$ ou variation marginale de la distance perceptive par rapport au débit. Enfin, l'étape $102_2$ est elle-même suivie d'une étape $102_3$ consistant à changer le quantificateur courant pour retenir le quantificateur du sous-signal ou sous-bande sb qui conduit à la meilleure amélioration de la distance perceptive rapportée au débit, c'est-à-dire du gain précédemment mentionné. L'étape $102_3$ est alors elle-même suivie d'un appel itératif $102_4$ permettant de soumettre à nouveau la trame considérée au test du critère de distance perceptive $102_1$, compte tenu du quantificateur choisi à l'étape $102_3$.

En ce qui concerne l'étape précitée, on indique que la modification du quantificateur du sous-signal qui a conduit à la plus forte diminution de distance perceptive est effectuée par comparaison entre les différents sous-signaux ou sous-bandes, pour chaque sous-signal, un seul nouveau quantificateur voisin du quantificateur courant étant évalué.

En ce qui concerne l'étape $102_2$, on indique que le calcul du gain de distance perceptive rapportée au débit $\Delta J/\Delta R$ peut être remplacé par le calcul de la seule variation de la distance perceptive $\Delta J$.

Une description plus détaillée d'un processus d'allocation binaire itérative à débit constant sera maintenant donnée en liaison avec la figure 4c.

Conformément à un aspect particulièrement avantageux du procédé de codage en compression objet de la présente invention, le codage à débit constant peut être réalisé soit directement, suite à la mise en oeuvre de l'étape $101_5$ de la figure 4b, soit au contraire, à partir d'une solution issue de l'allocation binaire optimale en débit variable ainsi que représenté en figure 4b, c'est-à-dire après étape $102_5$ de la figure précitée.

En tout état de cause, l'ensemble des étapes représentées en figure 4c correspond sensiblement aux étapes représentées en figure 4b à l'étape 102 relative à l'allocation binaire itérative, le critère de distance perceptive sur la distance perceptive calculée étant remplacé par un critère de contrainte de débit.

Ainsi, l'étape d'allocation binaire itérative 102, représentée en figure 4c, comprend de manière semblable à celle de la figure 3b une étape $102'_0$ consistant à calculer la distance perceptive entre le signal d'origine so et le signal numérique codé/décodé estimé scde compte tenu de l'erreur de filtrage, c'est-à-dire de décomposition/recomposition en sous-bandes.

L'étape $102'_0$ est elle-même suivie d'une étape de test $102'_1$ consistant à soumettre la distance perceptive précitée calculée à un critère de contrainte de débit de codage.

Sur réponse positive au test de l'étape $102'_1$, le quantificateur retenu pour chaque sous-signal est alors le quantificateur courant choisi à l'étape $101_5$ où, le cas échéant, en fin d'étape $102_5$, lors de l'allocation binaire à débit variable mais à qualité constante.

Sur réponse négative au test réalisé à l'étape $102'_1$, cette étape est suivie d'une étape $102'_2$ consistant à calculer pour chaque sous-signal la distance perceptive lors de l'utilisation d'un quantificateur voisin du quantificateur courant pour la sous-bande et la trame considérée. Dans un tel cas, on indique que le quantificateur voisin du quantificateur courant est le quantificateur portant le nombre de bits immédiatement inférieur à celui du quantificateur courant pour la sous-bande considérée. L'étape $102'_2$ consiste également à calculer la variation marginale de distance perceptive rapportée au débit, c'est-à-dire une perte ou gain négatif notée également $\Delta J/\Delta R$. L'étape $102'_2$ est elle-même alors suivie d'une étape $102'_3$ consistant à changer et retenir le quantificateur d'un sous-signal, en particulier celui qui a conduit à la plus faible augmentation de la distance perceptive rapportée au changement de débit occasionné par la modification du quantificateur courant. L'étape $102'_3$ est alors suivie d'un appel itératif représenté par $102'_4$, permettant à nouveau de soumettre les valeurs perceptives calculées compte tenu du choix du quantificateur voisin retenu au test de l'étape $102'_1$ de contrainte de débit de codage. Bien entendu, l'appel itératif est poursuivi tant que le critère du test de l'étape $102'_1$ n'est pas satisfait.

Le procédé de codage en compression d'un signal numérique objet de la présente invention, dans son deuxième mode de réalisation, est particulièrement remarquable en raison du fait qu'il permet une diminution très importante du volume de calcul du fait du regroupement des techniques d'optimisation sous contrainte appliquées séparément aux courbes de contrainte de l'art antérieur et au processus d'allocation binaire itérative proprement dit défini dans le cadre du procédé objet de l'invention.

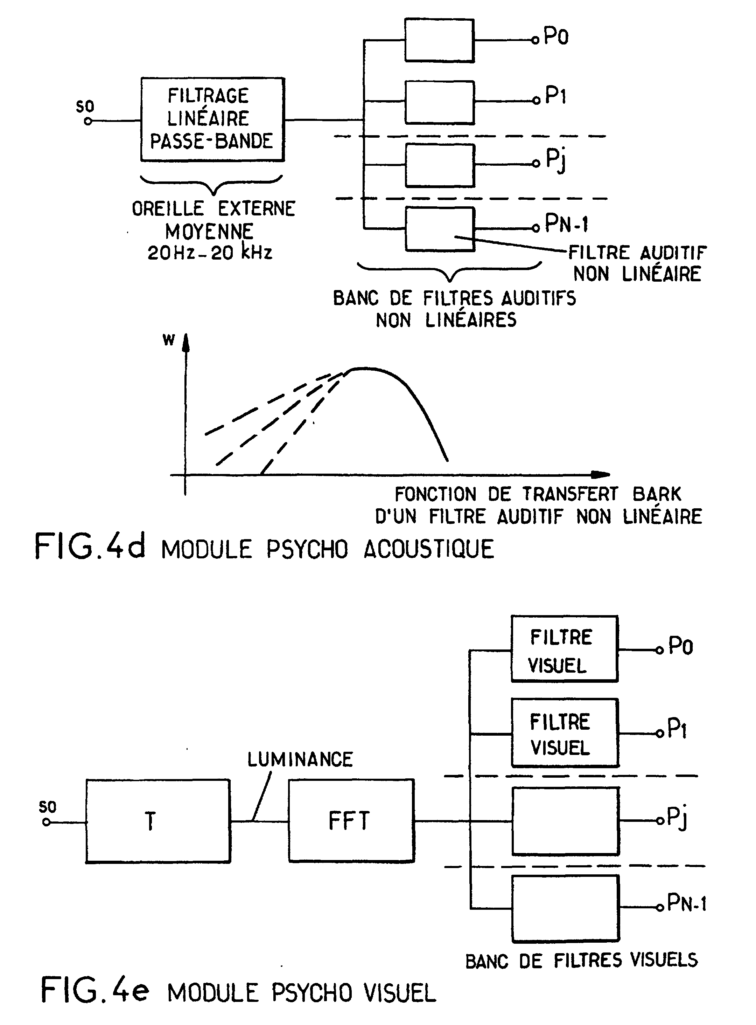

Ce regroupement est effectué au niveau du module psychophysique $\Psi$, lequel sera décrit relativement à un module psychoacoustique respectivement psychovisuel plus en détail en liaison avec des figures 4d et 4e.

En référence à la figure 4d, on indique qu'un module psychoacoustique constitue en fait un modèle d'oreille permettant de représenter la perception sonore du signal d'origine au niveau du nerf auditif. Un exemple de modèle d'oreille simule les oreilles externe et moyenne en les assimilant à un filtrage linéaire. Puis, il calcule la répartition de l'énergie dans les filtres auditifs selon un banc de filtres auditifs non linéaires. Les filtres auditifs non linéaires délivrent les valeurs perceptives notées $P_0$, Pj à $P_{N-1}$. Ces valeurs sont calculées en tenant compte de la courbe de seuil absolu d'audition, du masquage temporel, du caractère tonal/non tonal des signaux et des valeurs perceptives précitées, c'est-à-dire que la sensation auditive est calculée, cette sensation auditive pouvant être définie par exemple par l'intensité sonore en chaque point de la membrane basilaire dans la cochlée. Sur la figure 4d, on a représenté en outre la fonction de transfert d'un filtre auditif non linéaire comportant une graduation en abscisse en Bark et en ordonnée en énergie sonore. La partie en traits mixtes de la fonction de transfert d'un filtre auditif non linéaire correspond à la variation de cette fonction de transfert du fait du niveau d'énergie du signal incident. Dans un mode de réalisation spécifique, la cochlée de l'oreille humaine, représentée par le banc de filtres auditifs non linéaires, était simulée par un nombre de 50 filtres constitués en bancs de filtres auditifs.

On comprend ainsi que dans le module psychoacoustique représenté en figure 4d, par exemple, la courbe de masquage de l'art antérieur, utilisée dans le premier mode de réalisation relatif au contrôle de l'erreur de reconstruction dans le domaine fréquentiel est en fait intégrée au niveau de chaque filtre auditif. Toutefois, le masquage correspondant n'est pas identique dans chaque filtre.

On comprend en particulier que la mise en oeuvre de modules psychoacoustiques permet ainsi une meilleure modélisation de l'oreille tout en diminuant le volume de calcul et en ramenant celui-ci à celui représenté par le nombre de filtres auditifs utilisés pour réaliser la modélisation de l'oreille.

En ce qui concerne le modèle psychovisuel tel que représenté en figure 4e, celui-ci peut être mis en oeuvre à partir du signal différence de luminance entre le signal d'image d'origine so et le signal d'image codé/décodé estimé scde soumis ensuite à une transformée de Fourier telle qu'une transformée de Fourier rapide, par exemple. Le signal résultant est alors ensuite soumis à un filtrage par un banc de filtres simulant les filtres visuels sur chacune des bandes de fréquences correspondantes. Ces filtres visuels sont, en première analyse, assimilables aux filtres auditifs mais ne présentent pas des non-linéarités semblables.

Pour une description plus détaillée de ce type de module psychovisuel, on pourra utilement se reporter à l'article publié par A. Saadane, H. Senane et D. Barba intitulé "Quantificateur psychovisuel et schémas de codage associés", Journées "Nouvelles Techniques de Compression et de Représentation des Signaux", publié par le CCETT, 4, rue du Clos-Courtel, B.P. 59, 35512 CESSON-SEVIGNE CEDEX, France, en janvier 1995.

Dans le cas du modèle psychovisuel tel que représenté en figure 4e, l'estimation de la distance perceptive entre l'image présentée par le signal d'origine et l'image codée/décodée est alors la suivante :

- calcul pour chaque bande perceptive délivrée par les filtres visuels du seuil psychovisuel en fonction de l'image représentée par le signal d'origine ;
- estimation du spectre de la différence ainsi que décrit précédemment dans la description ;
- calcul de l'énergie de la différence sur chacune des bandes perceptives par sommation des raies du spectre qui appartiennent à la bande de fréquence considérée ;
- comparaison pour chacune des bandes perceptives, c'est-à-dire des bandes correspondant à chaque filtre visuel, de l'énergie du spectre avec le seuil psychovisuel et prise en compte comme distance perceptive du plus grand dépassement.

Ce mode opératoire permet de transposer directement le procédé de codage en compression d'un signal vidéonumérique selon l'invention. Dans un tel cas, il est donc possible d'utiliser des bancs de filtres à reconstruction non parfaite avec des critères psychovisuels tels qu'ils ont été définis prédemment. Ce mode opératoire permet ainsi de travailler à échantillonnage critique avec une bonne localisation spatiale de la décomposition et même d'assurer la compatibilité du processus avec d'autres codeurs d'images dans lesquels le choix des pas de quantification ne serait pas établi avec les mêmes règles psychovisuelles.

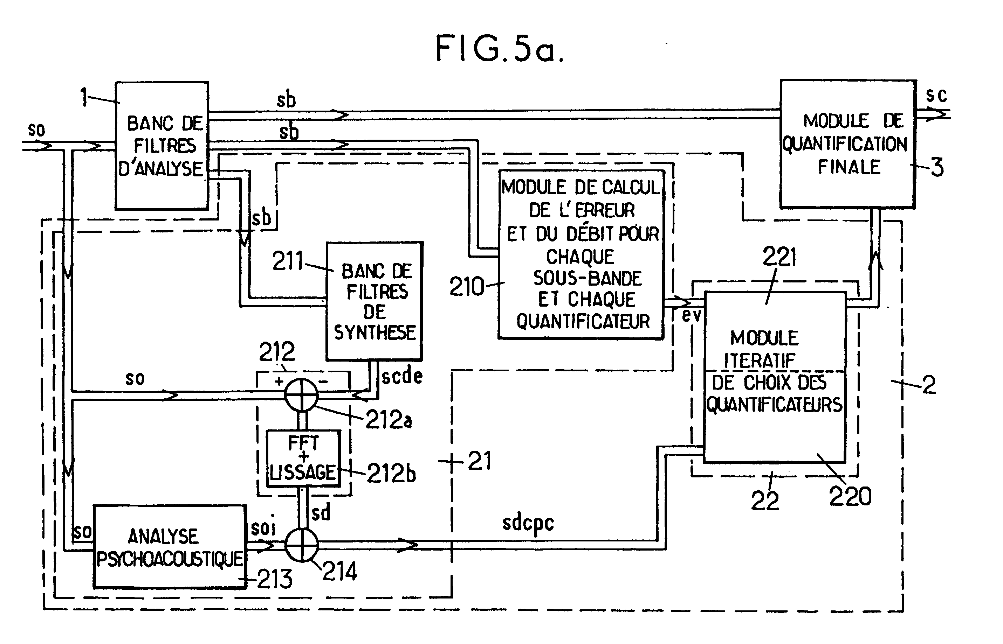

Une description plus détaillée d'un dispositif de codage en compression d'un signal numérique audiofréquence ou vidéofréquence sera maintenant donnée en liaison avec les figures 5a et 5b relativement à un processus de contrôle de l'erreur de reconstruction finale dans le domaine fréquentiel, respectivement dans le domaine perceptif.

Un dispositif de codage en compression d'un signal numérique avec contrôle de reconstruction finale objet de la présente invention, permettant la mise en oeuvre du procédé de codage dans le domaine fréquentiel précédemment décrit dans la description, sera maintenant donné en liaison avec la figure 5a.

De manière classique, on indique que le dispositif objet de la présente invention comprend un banc de filtres d'analyses noté 1, recevant le signal d'origine so, ce banc de filtres d'analyses 1 permettant d'effectuer une décomposition en sous-bandes de fréquences de ce signal d'origine selon un pavage déterminé de sous-bandes notées sb.

Le dispositif selon l'invention comporte également un module 2 sélecteur de quantificateurs et un module de quantification finale noté 3 recevant les signaux en sous-bandes sb, ce module de quantification finale 3 étant piloté par le module 2 sélecteur de quantificateurs. Le module 3 délivre bien entendu le signal codé sc à partir des signaux en sous-bandes sb, ce signal codé étant quantifié ainsi que décrit précédemment dans la description, conformément au procédé décrit dans son premier mode de réalisation.

Selon un aspect particulièrement remarquable du dispositif objet de la présente invention telle que représentée en figure 5a, le module 2 sélecteur de quantificateurs permet d'effectuer, pour chaque sous-signal sb, une allocation binaire et une quantification en fonction de cette allocation.

Dans ce but, le module 2 comprend un sous-module 21 d'estimation de la différence entre le signal d'origine so et le signal codé/décodé estimé noté scde ainsi que décrit précédemment dans la description. Le module 21 d'estimation de cette différence délivre une différence estimée, cette différence estimée étant fonction de l'erreur de filtrage de décomposition en sous-bandes et de l'erreur de quantification de chaque sous-signal.

En outre, le module 2 sélecteur de quantificateurs comprend également un module 22 d'allocation binaire itérative proprement dit permettant, sur critère de contrainte de distance entre le signal numérique codé/décodé, scde, et le signal d'origine, respectivement de contrainte de débit de codage et calcul de l'erreur totale de codage pour une allocation binaire courante, d'établir une allocation voisine par changement du quantificateur courant de l'un des sous-signaux ou sous-bandes au profit d'un quantificateur voisin, ce processus permettant l'attribution d'une allocation binaire optimale.

Ainsi que représenté sur la figure 5a, on indique que le module 21 d'estimation de la différence entre le signal d'origine so et le signal codé/décodé estimé scde en vue de réaliser une allocation binaire itérative conduite sur critère de contrainte de distance perceptive dans le domaine fréquentiel, comprend au moins un module 210 permettant de calculer l'erreur de quantification et le débit estimé dû à la quantification pour chaque sous-bande et chaque quantificateur d'une pluralité de quantificateurs donnée. Ce module de calcul 210 reçoit l'ensemble des sous-signaux délivrés par le banc de filtres d'analyse 1 et délivre pour chaque sous-signal sb et chaque quantificateur un ensemble de valeurs ev représentatives du débit et de l'erreur quadratique de quantification pour chaque quantificateur disponible, pour chaque sous-bande de fréquence sb et pour la trame d'échantillons considérées.

En outre, ainsi qu'on l'observera sur la figure 5a, le module 21 d'estimation de la différence entre signal d'origine et signal codé/décodé estimé comprend un module de filtrage de synthèse 211. Le module de filtrage de synthèse 211 reçoit l'ensemble des sous-signaux ou sous-bandes sb délivré par le module filtrage d'analyse 1 et délivre le signal codé/décodé estimé scde précité.

En outre, le module 21 d'estimation de la différence entre le signal d'origine et le signal codé/décodé estimé comprend un module soustracteur 212 recevant le signal d'origine so ainsi que le signal codé/décodé estimé scde délivré par le module de filtrage de synthèse 211. Le module soustracteur 212 délivre ainsi un signal différence noté sd.

Ainsi qu'on l'a en outre représenté en figure 5a, on indique que le module soustracteur 212 peut en fait consister en un soustracteur proprement dit noté 212a, recevant le signal d'origine so et le signal codé/décodé estimé scde et délivrant un signal différence brut, ce module 212a étant suivi d'un module de calcul de transformée de Fourier rapide FFT, auquel est ajoutée une fonction de lissage recevant le signal différence brut et délivrant le signal différence précédemment cité sd. Le module de transformée de Fourier rapide FFT et de lissage porte la référence 212b.

Enfin, le module 21 d'estimation de la différence entre le signal d'origine so et le signal codé/décodé estimé scde comprend, ainsi que représenté sur la figure Sa, un module d'analyse psychophysique noté 213, ce module permettant une analyse perceptive du signal d'origine so et permettant d'interpréter ce signal d'origine selon une loi de contrainte perceptive dans le domaine fréquentiel. Le module d'analyse psychophysique délivre alors un signal d'origine interprété noté soi.

Enfin, le module 21 comporte un circuit de calcul de type soustracteur recevant le signal d'origine interprété soi et le signal différence sd et délivrant un signal de contrainte perceptive corrigé sdcpc. Le signal de contrainte perceptive corrigé sdcpc et l'ensemble de valeurs ev délivré par le module de calcul de l'erreur et du débit pour chaque sous-bande et chaque quantificateur sont délivrés au module 22 d'allocation binaire itérative, pour réaliser l'allocation binaire itérative ainsi que décrit précédemment dans la description en liaison avec la figure 3a.

En ce qui concerne le module d'allocation binaire itérative 22, on indique que celui-ci comporte au moins un module 220 de calcul de la densité spectrale de puissance totale de l'erreur de reconstruction due à la quantification et un module 221 de discrimination à partir d'une allocation binaire courante d'une allocation binaire spécifique permettant d'effectuer soit une allocation binaire à qualité constante mais à débit variable, soit une allocation à débit constant ainsi que décrit précédemment dans la description.

On rappelle que l'allocation binaire spécifique est effectuée sur critères de contrainte de la densité spectrale de puissance totale de l'erreur de reconstruction recalculée. Pour chaque sous-signal, cette allocation binaire spécifique est identique à l'allocation binaire courante sur réponse positive au critère précité, et, sur réponse négative à ce critère, l'allocation binaire spécifique diffère de l'allocation binaire courante qui correspond à un quantificateur du sous-signal qui conduit à la meilleure amélioration de la distance perceptive rapportée à la variation de débit. Cette correspondance est établie sur critère de calcul, pour chaque sous-signal ou sous-bande sb, de la densité spectrale de puissance de cette erreur lors de l'utilisation d'un quantificateur voisin de ce quantificateur courant et de calcul de distance perceptive par rapport au débit de codage correspondant.

Bien entendu, on comprend que le module de calcul de la densité spectrale de puissance totale de l'erreur de reconstruction due à la quantification met en oeuvre, par exemple, un programme de calcul sur chaque trame de chaque sous-bande permettant de réaliser ce calcul conformément à la relation 3.

En ce qui concerne le module de discrimination précité, à partir de l'allocation binaire courante, on indique que celui-ci met en oeuvre un programme sous forme logicielle dont l'organigramme correspond bien entendu à celui de la figure 3a, pour l'allocation binaire à qualité constante et à débit variable, respectivement à la figure 3b pour l'allocation binaire à débit constant.

En ce qui concerne le dispositif de codage en compression d'un signal numérique relatif au deuxième mode de réalisation du procédé de codage objet de l'invention dans le domaine perceptif, tel que représenté en figure 5b, on indique que celui-ci comporte des éléments semblables et portant la même référence numérique que ceux de la figure 5a mais apparaît sensiblement simplifié par rapport à ce dispositif.

Le dispositif dans ce cas comporte, ainsi que représenté sur la figure précitée, le banc de filtres d'analyse 1, et le module de quantification finale 3.

Toutefois, en ce qui concerne le module 21 d'estimation de la différence entre signal codé/décodé estimé et signal d'origine scde et so, celui-ci apparaît sensiblement simplifié dans la mesure où, d'une part, la fonction de transformée de Fourier rapide et de lissage 212b est supprimée et où, d'autre part, le module psychophysique 213 est supprimé du module 21 précité et reporté au niveau du module d'allocation binaire proprement dit 22. Toutefois, ainsi que représenté sur la figure 5b, dans le module 21 le module 210 de calcul de l'erreur de quantification et du débit estimé dû à la quantification pour chaque sous-signal ou sous-bande sb et pour chaque quantificateur de l'ensemble des quantificateurs disponibles est maintenu, ce module 210 recevant l'ensemble des sous-signaux ou sous-bandes délivrés par le module de filtrage et d'analyse 1 et délivrant pour chaque sous-signal et chaque quantificateur un ensemble de valeurs ev de débit et d'erreur de quantification sous forme d'erreur quadratique et de quantification, par exemple. Cet ensemble de valeurs est noté ev, de la même manière que dans le cas de la figure 5a.

De même que dans la figure 5a, le module 211 de filtrage de synthèse, identique à celui de la figure 5a est maintenu, ce module de filtrage de synthèse délivrant le signal codé/décodé estimé scde, précédemment décrit dans la description.

En outre, dans le dispositif représenté en figure 5b, la fonction 212b de transformée de Fourier rapide et de lissage étant supprimée, le module 212, module soustracteur, est maintenu mais toutefois réduit à un simple soustracteur proprement dit 212a, recevant d'une part le signal d'origine so et d'autre part, le signal codé/décodé estimé scde, délivré par le banc de filtres de synthèse 211 et délivrant le signal différence sd précédemment décrit dans la description. En effet, pour calculer les valeurs perceptives du signal différence sd, il n'est pas nécessaire de lisser celle-ci auparavant.

Ainsi, contrairement au mode de réalisation de la figure 5a, le module 22 d'allocation binaire itérative, dans le mode de réalisation de la figure 5b, reçoit le signal d'origine so, le signal différence précité sd et l'ensemble de valeurs ev délivré par le module 210 de calcul de l'erreur et du débit pour chaque sous-bande et chaque quantificateur disponible.

Enfin, ainsi que représenté en figure 5b, le module 22 d'allocation binaire itérative comporte de manière particulièrement remarquable un module psychophysique 222 recevant le signal d'origine et permettant de transformer chacun des sous-signaux sb en une pluralité de valeurs perceptives, les valeurs $P_0$ à $P_{N-1}$ précédemment décrites dans la description, en liaison avec les figures 4d et 4e et représentant le domaine perceptif précité. Grâce au module psychophysique 222, chaque sous-signal ou sous-bande sb est transformé en une pluralité de valeurs perceptives, représentatives de l'effet physiologique produit par le signal d'origine et le signal codé/décodé perçu, ces valeurs perceptives représentant, bien entendu, le domaine perceptif.

Le module 22 comporte également un module de calcul 220 sur ces valeurs perceptives, de la distance perceptive calculée entre le signal d'origine so et le signal codé/décodé estimé scde, compte tenu de l'erreur de filtrage de décomposition en sous-bandes de fréquences.

Il comporte également un module 221 de discrimination à partir d'une allocation binaire courante d'une allocation binaire spécifique sur critère de contrainte de distance perceptive, de cette distance perceptive calculée. Cette allocation binaire spécifique pour chaque sous-signal ou sous-bande sb est identique à l'allocation binaire courante sur réponse positive à ce critère de contrainte. Elle diffère au contraire sur réponse négative à ce critère de contrainte de l'allocation binaire courante et correspond alors à un quantificateur du sous-signal qui conduit à la meilleure amélioration de la distance perceptive calculée rapportée au débit de codage, lors de l'utilisation d'un quantificateur voisin de ce quantificateur courant.

En ce qui concerne la mise en oeuvre des modules 220 et 221, on comprend que ceux-ci sont réalisés sous forme logicielle par exemple par la mise en oeuvre d'un programme dont l'organigramme correspond à celui des figures 4b et 4c précédemment décrites dans la description.

Enfin, dans les deux modes de réalisation du dispositif objet de la présente invention, tels que représentés en figures 5a et 5b, les bancs de filtres utilisés pour le banc de filtres d'analyse 1 ou le banc de filtres de synthèse 211 peuvent être constitués, ainsi que représenté en figure 5c, par des filtres à ondelettes dans le cas d'une compression par paquets d'ondelettes, l'atténuation du filtre étant portée en ordonnée en décibels alors qu'en abscisse les raies fréquentielles d'une transformée de Fourier rapide 1024 à 512 raies sont représentées. Le banc de filtres utilisé n'est pas idéal. Chaque filtre présente un support plus large que son support nominal et, en conséquence, plusieurs sous-signaux contribuent à la reconstruction d'une même raie fréquentielle. Une telle utilisation est rendue possible grâce à la mise en oeuvre du procédé objet de la présente invention. Pour une description plus complète de ce type de filtre, on pourra utilement se reporter à l'article publié par P. Philippe, F. Moreau de Saint-Martin et al. intitulé "A relevant criterion for wavelet filters in audiocompression", in proceedings of 8th Convention of the AES, Paris, 1995.

En ce qui concerne la mise en oeuvre du procédé et du dispositif de codage objet de la présente invention dans le deuxième mode de réalisation et selon la figure 5b dans le domaine perceptif, lorsque le signal est un signal audiofréquence, on indique que les modèles psychoacoustiques ou modèles d'oreilles qui peuvent être utilisés sont, par exemple :

- le modèle POM tel que décrit par C. Colomes, "Etude d'un modèle d'audition et d'une mesure objective de la qualité d'un signal sonore dans le contexte du codage à réduction de débit", Thèse de l'Université de Rennes I, 1994.
- PAQM décrit par J.G. Beerends et J.A. Stemerdink, "A Perceptual audioquality measure based on a psychoacoustic sound", Journal of the AES, vol. 40, N° 12, 963-978 ;
- PERCEVAL décrit par B. Paillard, P. Mabillau, S. Morisette et J. Soumagne, "PERCEVAL : Perceptual Evaluation of the quality of audiosignals", Journal of the AES, vol. 40, N° 1/2, 21-31, 1992.

Dans les cas précités, on indique que le modèle d'oreille ou module psychoacoustique apparaît bien adapté dans la mesure où le modèle d'oreille consiste à comparer une courbe de masquage dans le domaine de l'oreille, c'est-à-dire le domaine perceptif, à l'intensité du signal au niveau de l'oreille interne, c'est-à-dire après filtrage par les filtres de l'oreille modélisés par les filtres linéaires. Ainsi la contribution du bruit injecté dans une sous-bande a une influence linéaire sur chacune des composantes du signal dans le domaine de l'oreille puisque ce bruit procède du résultat des filtrages par les filtres de synthèse et par les filtres de l'oreille. Autrement dit, le principe qui a permis de calculer la puissance du bruit dans chaque raie spectrale permet de calculer précisément la puissance de chacune des composantes du signal dans le domaine de l'oreille. Pour chaque composante, la puissance du bruit est une combinaison linéaire des puissances des bruits de quantification dans les sous-bandes. Les coefficients de cette combinaison linéaire ne dépendent que des filtres de synthèse du banc de filtres utilisé et des filtres de l'oreille. Dans ce cas, le processus d'allocation binaire est une extension directe du processus qui a été décrit dans le domaine fréquentiel. Un tel mode opératoire montre ainsi que pour les modèles d'oreille précités, la complexité de l'allocation binaire est sensiblement la même, voire inférieure à celle de l'allocation binaire dans le domaine fréquentiel.

## Revendications

1. Procédé de codage en compression d'un signal numérique, avec contrôle de reconstruction finale, dans lequel un signal numérique d'origine, constitué par une succession de trames d'échantillons, est soumis à une décomposition en sous-bandes de fréquences constituant des sous-signaux, et, pour chaque sous-signal à un processus d'allocation binaire puis de quantification, en fonction de cette allocation, pour engendrer un signal numérique codé, **caractérisé en ce que** ledit procédé comporte au moins les étapes consistant à effectuer:

   - une première estimation d'un signal numérique codé et décodé ($s_{cde}$) ;
   - une estimation de la différence entre le signal d'origine ($s_0$) et le signal numérique codé-décodé estimé ($s_{cde}$), ladite différence estimée étant fonction de l'erreur de filtrage de décomposition en sous-bandes et de l'erreur de quantification pour une pluralité de quantificateurs dans chaque sous-signal;
   - et une allocation binaire itérative, sur critère de contrainte de distance entre le signal numérique codé-décodé estimé et le signal d'origine, et respectivement sur contrainte de débit de codage avec calcul de l'erreur totale de codage, consistant, pour un quantificateur courant et un quantificateur voisin parmi ladite pluralité de quantificateurs, à attribuer un quantificateur optimum pour réduire ladite distance et/ou l'erreur de codage et affiner ladite première estimation du signal codé-décodé.

2. Procédé selon la revendication 1, **caractérisé en ce que** ladite allocation binaire itérative est réalisée sur critère de contrainte de distance dans le domaine fréquentiel, chaque sous-signal correspondant à une sous-bande de fréquence obtenue par décomposition en sous-bandes de fréquences, à débit de codage variable ou à contrainte de débit constant.

3. Procédé selon la revendication 2, **caractérisé en ce que** ladite estimation de la différence entre le signal d'origine et le signal numérique codé-décodé estimé, pour un contrôle de l'erreur de reconstruction dans le domaine fréquentiel, comprend les étapes successives consistant à :

- calculer l'erreur de filtrage engendrée par la décomposition en sous-bandes de fréquences et par la recomposition de ces sous-bandes de fréquences ;
- établir une loi de contrainte perceptive dans le domaine fréquentiel ;
- calculer à partir de ladite loi de contrainte perceptive et de ladite erreur de filtrage une contrainte perceptive corrigée, et, pour chaque sous-signal :

- calculer pour chaque quantificateur de ladite pluralité de quantificateurs le nombre de bits alloués possibles et l'erreur quadratique due au bruit de quantification ;
- effectuer un tri des quantificateurs en fonction de l'erreur quadratique du bruit de quantification ;
- initialiser le choix d'au moins un quantificateur parmi les quantificateurs.

**4.** Procédé selon la revendication 2 ou 3, **caractérisé en ce que**, dans le cas d'un débit de codage variable, ladite allocation binaire itérative consiste à :

- calculer la densité spectrale de puissance totale de l'erreur de reconstruction due à la quantification ;
- soumettre la densité spectrale de puissance totale de l'erreur de reconstruction calculée audit critère de contrainte fréquentielle, et, sur réponse positive à ce critère, retenir comme quantificateur, pour chaque sous-signal, le quantificateur courant, et, sur réponse négative, à ce critère,
- calculer, pour chaque sous-signal, la densité spectrale de puissance de l'erreur totale lors de l'utilisation d'un quantificateur voisin du quantificateur courant et calculer le gain de distance perceptive par rapport au débit de codage correspondant ;
- modifier le quantificateur du sous-signal qui conduit à la meilleure amélioration de la distance perceptive rapportée à la variation de débit, ce qui permet d'amener l'allocation binaire à une allocation optimale.

**5.** Procédé selon l'une des revendications 2, 3 ou 4, **caractérisé en ce que**, dans le cas d'un débit de codage fixe, celui-ci consiste à :

- calculer la densité spectrale de puissance totale de l'erreur de reconstruction due à la quantification ;
- soumettre la densité spectrale de puissance totale de l'erreur de reconstruction calculée au critère de contrainte de débit de codage, et, sur réponse positive à ce critère, retenir comme quantificateur, pour chaque sous-signal, le quantificateur courant, et, sur réponse négative à ce critère,
- calculer, pour chaque sous-signal, la densité spectrale de puissance de l'erreur totale lors de l'utilisation d'un quantificateur voisin du quantificateur courant et calculer la variation de distance perceptive par rapport au débit,
- modifier le quantificateur du sous-signal qui a conduit à la plus faible variation de la distance perceptive rapportée au débit.

**6.** Procédé selon la revendication 1, **caractérisé en ce que** ladite allocation binaire itérative est réalisée sur critère de contrainte de distance dans le domaine perceptif, ladite étape d'estimation de la différence entre le signal d'origine et le signal numérique codé-décodé estimé étant établie à partir d'un module psychophysique, ledit module psychophysique permettant de calculer une pluralité de valeurs perceptives représentatives de l'effet physiologique produit par ledit signal d'origine et d'estimer une pluralité de valeurs perceptives représentatives de l'effet physiologique du signal numérique codé-décodé estimé, connaissant ledit signal d'origine, ladite différence estimée et l'erreur de quantification de chaque sous-signal, lesdites valeurs perceptives représentant le domaine perceptif.

**7.** Procédé selon la revendication 6, **caractérisé en ce que**, pour un contrôle de l'erreur de reconstruction finale dans le domaine perceptif, ladite étape d'estimation de la différence entre le signal numérique codé-décodé estimé et le signal d'origine comprend les étapes successives consistant à :

- calculer l'erreur de filtrage de décomposition et d'analyse des sous-bandes de fréquences, et, pour chaque. sous-signal,
- calculer pour chaque quantificateur de ladite pluralité de quantificateurs, le nombre de bits alloués possibles et l'erreur quadratique due au bruit de quantification,
- effectuer un tri des quantificateurs en fonction de l'erreur quadratique due au bruit de quantification,

- initialiser le choix d'au moins un quantificateur parmi les quantificateurs triés.

8. Procédé selon la revendication 7, **caractérisé en ce que** ladite étape d'initialisation du choix d'au moins un quantificateur consiste, pour chaque sous-signal, à sélectionner le quantificateur qui, pour un nombre minimal de bits, transforme ce sous-signal en un sous-signal quantifié dont l'ensemble de valeurs perceptives est sensiblement identique, aux seuils différentiels de perception près.

9. Procédé selon la revendication 7, **caractérisé en ce que** ladite étape d'initialisation du choix d'au moins un quantificateur consiste, pour chaque sous-signal, à sélectionner le quantificateur qui, pour un nombre minimal de bits, transforme ce sous-signal en un sous-signal quantifié dont l'erreur, par rapport à ce sous-signal, est indétectable en présence du signal numérique d'origine, le critère d'indétectabilité du sous-signal quantifié portant sur les valeurs perceptives du bruit de quantification.

10. Procédé selon la revendication 7, **caractérisé en ce que**, dans le cas d'un débit de codage variable, ladite allocation binaire itérative consiste à :

- calculer sur lesdites valeurs perceptives la distance perceptive entre le signal d'origine et le signal reconstruit après quantification, compte tenu de l'erreur de filtrage de décomposition et d'analyse,
- soumettre la distance perceptive calculée à un critère de distance perceptive, et, sur réponse positive à ce critère, retenir comme quantificateur, pour chaque sous-signal, le quantificateur courant, et, sur réponse négative à ce critère,
- calculer, pour chaque sous-signal, la distance perceptive lors de l'utilisation d'un quantificateur voisin du quantificateur courant et calculer le gain de distance perceptive rapportée au débit ;
- modifier le quantificateur du sous-signal qui conduit à la meilleure amélioration de la distance perceptive rapportée au débit, ce qui permet d'amener l'allocation binaire à une allocation optimale.

11. Procédé selon l'une des revendications 7 ou 10, **caractérisé en ce que**, dans le cas d'un débit de codage fixe, celui-ci consiste à

- calculer la distance perceptive entre le signal d'origine et le signal numérique codé-décodé, compte tenu de l'erreur de filtrage,
- soumettre la distance perceptive calculée à un critère de contrainte de débit de codage, et, sur réponse positive à ce critère, retenir comme quantificateur, pour chaque sous-signal, le quantificateur courant, et, sur réponse négative à ce critère,
- calculer, pour chaque sous-signal, la distance perceptive lors de l'utilisation d'un quantificateur voisin d'un quantificateur courant, et calculer la variation de distance perceptive rapportée au débit,
- modifier le quantificateur du sous-signal qui a conduit à la plus faible variation de distance perceptive rapportée au débit.

12. Dispositif de codage en compression d'un signal numérique, avec contrôle de reconstruction finale, comportant des moyens de filtrage d'analyse en sous-bandes de fréquences du signal d'origine, permettant d'engendrer des sous-signaux, des moyens sélecteurs de quantificateurs et des moyens quantificateurs permettant d'effectuer pour chaque sous-signal une allocation binaire et une quantification, en fonction de cette allocation, **caractérisé en ce que** lesdits moyens sélecteurs (2) comprennent :

- des moyens d'estimation (21) de la différence entre le signal d'origine ($s_0$) et un signal codé-décodé estimé en première approximation ($s_{cde}$), ladite différence estimée étant fonction de l'erreur de filtrage de décomposition en sous-bandes et de l'erreur de quantification de chaque sous-signal, et
- des moyens d'allocation binaire itérative (22) agencés pour, sur critère de contrainte de distance entre le signal numérique codé-décodé et le signal d'origine, et respectivement sur contrainte de débit de codage avec calcul de l'erreur totale de codage, pour un quantificateur courant et un quantificateur voisin parmi une pluralité de quantificateurs, attribuer un quantificateur optimum pour réduire ladite distance et/ou l'erreur de codage et affiner ladite première approximation du signal codé-décodé.

13. Dispositif selon la revendication 12, **caractérisé en ce que**, pour une allocation binaire itérative réalisée sur critère de contrainte de distance perceptive dans le domaine fréquentiel, lesdits moyens d'estimation de la différence entre le signal d'origine et le signal codé-décodé estimé comprennent au moins :

-   des moyens de calcul de l'erreur de quantification et du débit estimé dû à la quantification pour chaque sous-bande et chaque quantificateur d'une pluralité de quantificateurs, lesdits moyens de calcul recevant l'ensemble desdits sous-signaux délivrés par lesdits moyens de filtrage d'analyse et délivrant, pour chaque sous-signal et chaque quantificateur, un ensemble de valeurs de débit et d'erreur quadratique de quantification ;
-   des moyens de filtrage de synthèse recevant l'ensemble des sous-signaux délivrés par les moyens de filtrage d'analyse et délivrant le signal codé-décodé estimé,
-   des moyens soustracteurs recevant ledit signal d'origine et ledit signal codé-décodé estimé et délivrant un signal différence ;
-   un module d'analyse psychophysique du signal d'origine recevant ledit signal d'origine et permettant d'interpréter ledit signal d'origine selon une loi de contrainte perceptive dans le domaine fréquentiel, ledit module d'analyse psychophysique délivrant un signal d'origine interprété ;
-   des moyens de calcul recevant ledit signal d'origine interprété et ledit signal de différence et délivrant un signal de contrainte perceptive corrigé, ledit ensemble de valeurs et ledit signal de contrainte perceptive corrigé étant délivrés auxdits moyens d'allocation binaire itérative.

**14.** Dispositif selon les revendications 12 et 13, **caractérisé en ce que** lesdits moyens d'allocation binaire itérative comportent au moins :

-   des moyens de calcul de la densité spectrale de puissance totale de l'erreur de reconstruction due à la quantification ;
-   des moyens de discrimination, à partir d'une allocation binaire courante, d'une allocation binaire spécifique, sur critère de contrainte de ladite densité spectrale de puissance totale de l'erreur de reconstruction calculée, l'allocation binaire spécifique, pour chaque sous-signal, étant identique à l'allocation binaire courante sur réponse positive audit critère, et, sur réponse négative à ce critère, l'allocation binaire spécifique différent de l'allocation binaire courante et correspondant à un quantificateur du sous-signal qui conduit à la meilleure amélioration de la distance perceptive rapportée à la variation de débit, sur critère de calcul pour chaque sous-signal de la densité spectrale de puissance de cette erreur lors de l'utilisation d'un quantificateur voisin de ce quantificateur courant et de calcul de distance perceptive par rapport au débit de codage correspondant.

**15.** Dispositif selon la revendication 12, **caractérisé en ce que**, pour une allocation binaire itérative réalisée sur critère de contrainte de distance perceptive dans le domaine perceptif, dans lequel chaque sous-signal constitué par une sous-bande de fréquences est transformé en une pluralité de valeurs perceptives représentatives de l'effet physiologique produit par le signal d'origine et le signal codé-décodé perçu, ces valeurs perceptives représentant le domaine perceptif, lesdits moyens d'estimation de la différence entre signal codé-décodé et signal d'origine comprennent au moins :

-   des moyens de calcul de l'erreur de quantification et du débit estimé dû à la quantification pour chaque sous-signal et pour chaque quantificateur d'une pluralité de quantificateurs, lesdits moyens de calcul recevant l'ensemble desdits sous-signaux délivrés par lesdits moyens de filtrage d'analyse et délivrant pour chaque sous-signal et chaque quantificateur un ensemble de valeurs de débit et d'erreur quadratique de quantification,
-   des moyens de filtrage de synthèse recevant l'ensemble des sous-signaux délivrés par les moyens de filtrage d'analyse et délivrant un signal codé-décodé estimé ;
-   des moyens soustracteurs recevant ledit signal d'origine et ledit signal codé-décodé estimé et délivrant un signal différence, le signal d'origine, le signal différence et l'ensemble de valeurs étant délivrés auxdits moyens d'allocation binaire itérative.

**16.** Dispositif selon la revendication 12 et 15, **caractérisé en ce que** lesdits moyens d'allocation binaire itérative comportent au moins :

-   un module psychophysique recevant ledit signal d'origine permettant de transformer chacun des sous-signaux en une pluralité de valeurs perceptives, représentant le domaine perceptif ;
-   des moyens de calcul, sur lesdites valeurs perceptives, de la distance perceptive calculée entre ledit signal d'origine et le signal codé-décodé estimé, compte tenu de l'erreur de filtrage de décomposition en sous-bandes de fréquences ;
-   des moyens de discrimination, à partir d'une allocation binaire courante, d'une allocation binaire spécifique, sur critère de contrainte de distance perceptive de cette distance perceptive calculée, l'allocation binaire spécifique pour chaque sous-signal étant identique à l'allocation binaire courante sur réponse positive à ce critère de contrainte, et, sur réponse négative à ce critère de contrainte, l'allocation binaire spécifique différant de

**EP 0 812 070 B1**

l'allocation binaire courante et correspondant à un quantificateur du sous-signal qui conduit à la meilleure amélioration de la distance perceptive calculée, rapportée au débit de codage, lors de l'utilisation d'un quantificateur voisin de ce quantificateur courant.

**Patentansprüche**

1. Verfahren zur Kompressionscodierung eines digitalen Signals mit Endrekonstruktionskontrolle, bei dem ein durch eine Aufeinanderfolge von Abtastprobenrahmen gebildetes, digitales Ursprungssignal einer Untersignale bildenden Zerlegung in Unterfrequenzbänder und für jedes Untersignal einem Binärzuweisungs- und danach in Abhängigkeit dieser Zuweisung einem Quantisierungsprozess unterzogen wird, um ein codiertes digitales Signal zu erzeugen, **dadurch gekennzeichnet, dass** das Verfahren wenigstens die Schritte umfasst, die darin bestehen, dass durchgeführt werden:

   - eine erste Schätzung eines codierten und decodierten digitalen Signals ($s_{cde}$);
   - eine Schätzung der Differenz zwischen dem Ursprungssignal ($s_0$) und dem geschätzten codierten-decodierten digitalen Signal, wobei die geschätzte Differenz eine Funktion des Filterungsfehlers der Zerlegung in Unterfrequenzbänder und des Quantisierungsfehlers für eine Vielzahl von Quantisierern in jedem Untersignal ist;
   - und eine iterative Binärzuweisung nach einem Abstandsbeschränkungskriterium zwischen dem geschätzten codierten-decodierten digitalen Signal und dem Ursprungssignal bzw. nach einer Codierungsratenbeschränkung mit Berechnung des Codierungsgesamtfehlers, die darin besteht, für einen laufenden Quantisierer und einen benachbarten Quantisierer aus der Vielzahl von Quantisierern einen optimalen Quantisierer zuzuweisen, um den Abstand und/oder den Codierungsfehler zu reduzieren und die erste Schätzung des codierten-decodierten Signals zu verfeinern.

2. Verfahren nach Anspruch 1, **dadurch gekennzeichnet, dass** die iterative Binärzuweisung nach dem Abstandsbeschränkungskriterium im Frequenzbereich ausgeführt wird, wobei jedes Untersignal einem durch Zerlegung in Frequenzunterbänder erhaltenen Frequenzunterband entspricht, und zwar mit variabler Codierungsrate oder mit Beschränkung auf eine konstante Rate.

3. Verfahren nach Anspruch 2, **dadurch gekennzeichnet, dass** die Schätzung der Differenz zwischen dem Ursprungssignal und dem geschätzten codierten-decodierten digitalen Signal für eine Kontrolle des Rekonstruktionsfehlers im Frequenzbereich die aufeinanderfolgenden Schritte umfasst, die darin bestehen, dass

   - der Filterungsfehler berechnet wird, der durch die Zerlegung in Frequenzunterbänder und durch die Wiederzusammensetzung dieser Frequenzunterbänder erzeugt wird;
   - ein Wahrnehmungsbeschränkungsgesetz im Frequenzbereich erstellt wird;
   - ausgehend vom genannten Wahrnehmungsbeschränkungsgesetz und vom genannten Filterungsfehler eine korrigierte Wahrnehmungsbeschränkung berechnet wird, und für jedes Untersignal:

   - für jeden Quantisierer der Vielzahl von Quantisierern die Anzahl von möglichen zugewiesenen Bits und der auf das Quantisierungsrauschen zurückzuführende quadratische Fehler berechnet werden;
   - eine Sortierung der Quantisierer in Abhängigkeit vom quadratischen Fehler des Quantisierungsrauschens durchgeführt wird;
   - die Wahl wenigstens eines Quantisierers aus den Quantisierern initialisiert wird.

4. Verfahren nach Anspruch 2 oder 3, **dadurch gekennzeichnet, dass** im Fall einer variablen Codierungsrate die genannte iterative Binärzuweisung darin besteht, dass:

   - die spektrale Gesamtleistungsdichte des auf die Quantisierung zurückzuführenden Rekonstruktionsfehlers berechnet wird;
   - die berechnete spektrale Gesamtleistungsdichte des Rekonstruktionsfehlers dem Frequenzbeschränkungskriterium unterzogen wird und bei positiver Reaktion auf dieses Kriterium der laufende Quantisierer als Quantisierer für jedes Untersignal festgehalten wird, und bei negativer Reaktion auf dieses Kriterium
   - für jedes Untersignal die spektrale Leistungsdichte des Gesamtfehlers bei Verwendung eines zum laufenden Quantisierer benachbarten Quantisierers berechnet wird und der Wahrnehmungsabstandsgewinn in Bezug auf die entsprechende Codierungsrate berechnet wird;
   - der Quantisierer des Untersignals geändert wird, der zur besten Verbesserung des auf die Ratenvariation

21

bezogenen Wahrnehmungsabstandes führt, was es erlaubt, die Binärzuweisung zu einer optimalen Zuweisung zu bringen.

**5.** Verfahren nach einem der Ansprüche 2, 3 oder 4, **dadurch gekennzeichnet, dass** dieses im Fall einer festen Codierungsrate darin besteht, dass

- die spektrale Gesamtleistungsdichte des auf die Quantisierung zurückzuführenden Rekonstruktionsfehlers berechnet wird;
- die berechnete spektrale Gesamtleistungsdichte des Rekonstruktionsfehlers dem Codierungsratenbeschränkungskriterium unterzogen wird und bei positiver Reaktion auf dieses Kriterium der laufende Quantisierer als Quantisierer für jedes Untersignal festgehalten wird, und bei negativer Reaktion auf dieses Kriterium
- für jedes Untersignal die spektrale Leistungsdichte des Gesamtfehlers bei Verwendung eines zum laufenden Quantisierer benachbarten Quantisierers berechnet wird und die Wahrnehmungsabstandsveränderung in Bezug auf die Rate berechnet wird;
- der Quantisierer des Untersignals geändert wird, der zur schwächsten Veränderung des auf die Rate bezogenen Wahrnehmungsabstandes führt.

**6.** Verfahren nach Anspruch 1, **dadurch gekennzeichnet, dass** die iterative Binärzuweisung nach dem Abstandsbeschränkungskriterium im Wahrnehmungsbereich ausgeführt wird, wobei der Schritt zur Schätzung der Differenz zwischen dem Ursprungssignal und dem geschätzten codierten-decodierten digitalen Signal ausgehend von einem psychophysikalischen Modul erstellt wird, wobei der psychophysikalische Modul das Berechnen einer Vielzahl von für die durch das Ursprungssignal erzeugte, physiologische Wirkung repräsentativen Wahrnehmungswerten und das Schätzen einer Vielzahl von für die physiologische Wirkung des geschätzten codierten-decodierten digitalen Signals repräsentativen Wahrnehmungswerten unter Kenntnis des Ursprungssignals, der geschätzten Differenz und der Quantisierungsfehler jedes Untersignals erlaubt, wobei die Wahrnehmungswerte den Wahrnehmungsbereich darstellen.

**7.** Verfahren nach Anspruch 6, **dadurch gekennzeichnet, dass** für eine Kontrolle des Endrekonstruktionsfehlers im Wahrnehmungsbereich der Schritt der Schätzung der Differenz zwischen dem geschätzten codierten-decodierten digitalen Signal und dem Ursprungssignal die aufeinanderfolgenden Schritte umfasst, die darin bestehen, dass:

- der Zerlegungsfilterungs- und Analysefehler der Frequenzunterbänder berechnet wird, und für jedes Untersignal
- für jeden Quantisierer der Vielzahl von Quantisierern die Anzahl von möglichen zugewiesenen Bits und der auf die Quantisierung zurückzuführende quadratische Fehler berechnet werden,
- eine Sortierung der Quantisierer in Abhängigkeit vom auf die Quantisierung zurückzuführenden quadratischen Fehler durchgeführt wird,
- die Wahl wenigstens eines Quantisierers aus den sortierten Quantisierern initialisiert wird.

**8.** Verfahren nach Anspruch 7, **dadurch gekennzeichnet, dass** der Schritt der Initialisierung der Wahl wenigstens eines Quantisierers für jedes Untersignal darin besteht, den Quantisierer auszuwählen, der für eine minimale Anzahl von Bits dieses Untersignal in ein quantisiertes Untersignal umwandelt, dessen Satz von Wahrnehmungswerten im wesentlichen identisch mit den differentiellen Wahrnehmungsschwellen in der Nähe ist.

**9.** Verfahren nach Anspruch 7, **dadurch gekennzeichnet, dass** der Schritt zur Initialisierung der Wahl wenigstens eines Quantisierers darin besteht, den Quantisierer auszuwählen, der für eine minimale Anzahl von Bits dieses Untersignal in ein quantisiertes Untersignal umwandelt, dessen Fehler in Bezug auf dieses Untersignal bei Vorliegen des digitalen Ursprungssignals undetektierbar ist, wobei das Kriterium der Undetektierbarkeit des quantisierten Untersignals auf den Wahrnehmungswerten Quantisierungsrauschen trägt.

**10.** Verfahren nach Anspruch 7, **dadurch gekennzeichnet, dass** im Falle einer variablen Codierungsrate die iterative Binärzuweisung darin besteht, dass:

- über die Wahrnehmungswerte der Wahrnehmungsabstand zwischen dem Ursprungssignal und dem nach Quantisierung rekonstruierten Signal unter Berücksichtigung des Zerlegungsfilterungs- und Analysefehlers berechnet wird,
- der berechnete Wahrnehmungsabstand einem Wahrnehmungsabstandskriterium unterzogen wird und bei positiver Reaktion auf dieses Kriterium als Quantisierer für jedes Untersignal der laufende Quantisierer festgehalten wird, und bei negativer Reaktion auf dieses Kriterium

- für jedes Untersignal der Wahrnehmungsabstand bei Verwendung eines zum laufenden Quantisierer benachbarten Quantisierers berechnet wird und der Gewinn des auf die Rate bezogenen Wahrnehmungsabstands berechnet wird;
- der Quantisierer des Untersignals geändert wird, der die beste Verbesserung des auf die Rate bezogenen Wahrnehmungsabstandes ergibt, was es erlaubt, die Binärzuweisung auf eine optimale Zuweisung zu bringen.

11. Verfahren nach einem der Ansprüche 7 oder 10, **dadurch gekennzeichnet, dass** dieses im Falle einer festen Codierungsrate darin besteht, dass:

- der Wahrnehmungsabstand zwischen dem Ursprungssignal und dem codierten-decodierten digitalen Signal unter Berücksichtigung des Filterungsfehlers berechnet wird,
- der berechnete Wahrnehmungsabstand einem Codierungsratenbeschränkungskriterium unterzogen wird und bei positiver Reaktion auf dieses Kriterium als Quantisierer für jedes Untersignal der laufende Quantisierer festgehalten wird, und bei negativer Reaktion auf dieses Kriterium
- für jedes Untersignal der Wahrnehmungsabstand bei Verwendung eines zum laufenden Quantisierer benachbarten Quantisierers berechnet wird und die Veränderung des auf die Rate bezogenen Wahrnehmungsabstandes berechnet wird,
- der Quantisierer des Untersignals geändert wird, der die schwächste Veränderung des auf die Rate bezogenen Wahrnehmungsabstandes ergeben hat.

12. Vorrichtung zur Kompressionscodierung eines digitalen Signals mit Endrekonstruktionskontrolle, umfassend Mittel zur Analysefilterung des Ursprungssignals in Frequenzunterbänder, was das Erzeugen von Untersignalen erlaubt, Auswahlmittel von Quantisierern und Quantisierermittel, die für jedes Untersignal das Durchführen einer Binärzuweisung und einer Quantisierung in Abhängigkeit dieser Zuweisung erlauben, **dadurch gekennzeichnet, dass** die Auswahlmittel (2) umfassen:

- Mittel (21) zur Schätzung der Differenz zwischen dem Ursprungssignal ($s_0$) und einem in erster Annäherung geschätzten codierten-decodierten Signal ($s_{cde}$), wobei die geschätzte Differenz eine Funktion des Filterungsfehlers der Zerlegung in Unterbänder und des Quantisierungsfehlers jedes Untersignals ist, und
- Mittel (22) zur. iterativen Binärzuweisung, die ausgelegt sind, um nach einem Abstandsbeschränkungskriterium zwischen dem codierten-decodierten digitalen Signal und dem Ursprungssignal bzw. nach einer Codierratenbeschränkung mit Berechnung des Codierungsgesamtfehlers für einen laufenden Quantisierer und einen benachbarten Quantisierer aus einer Vielzahl von Quantisierern einen optimalen Quantisierer zuzuweisen, um den genannten Abstand und/oder den Codierungsfehler zu reduzieren und die erwähnte erste Annäherung des codierten-decodierten Signals zu verfeinern.

13. Vorrichtung nach Anspruch 12, **dadurch gekennzeichnet, dass** für eine iterative Binärzuweisung, die nach dem Wahrnehmungsabstandsbeschränkungskriterium im Frequenzbereich ausgeführt wird, die erwähnten Mittel zur Schätzung der Differenz zwischen dem Ursprungssignal und dem geschätzten codierten-decodierten Signal wenigstens umfassen:

- Mittel zur Berechnung des Quantisierungsfehlers und der auf die Quantisierung zurückzuführenden geschätzten Rate für jedes Unterband und jeden Quantisierer einer Vielzahl von Quantisierern, wobei diese Mittel zur Berechnung den Satz der durch die Analysefilterungsmittel gelieferten Untersignale empfangen und für jedes Untersignal und jeden Quantisierer einen Satz von Werten der Rate und des quadratischen Quantisierungsfehlers liefern;
- Synthesefilterungsmittel, die den Satz der durch die Analysefilterungsmittel gelieferten Untersignale empfangen und das geschätzte codierte-decodierte Signal liefern,
- Subtrahierermittel, die das Ursprungssignal und das geschätzte codierte-decodierte Signal empfangen und ein Differenzsignal liefern;
- einen Modul zur psychophysikalischen Analyse des Ursprungssignals, der das Ursprungssignal empfängt und das Interpretieren des Ursprungssignals entsprechend einem Wahrnehmungsbeschränkungsgesetz im Frequenzbereich erlaubt, wobei dieser Modul zur psychophysikalischen Analyse ein interpretiertes Ursprungssignal liefert;
- Berechnungsmittel, die das interpretierte Ursprungssignal und das Differenzsignal empfangen und ein korrigiertes Wahrnehmungsbeschränkungssignal liefern, wobei der erwähnte Satz von Werten und das korrigierte Wahrnehmungsbeschränkungssignal an die genannten Mittel zur iterativen Binärzuweisung geliefert werden.

**14.** Vorrichtung nach den Ansprüchen 12 und 13, **dadurch gekennzeichnet, dass** die Mittel zur iterativen Binärzuweisung wenigstens umfassen:

- Mittel zur Berechnung der spektralen Gesamtleistungsdichte des auf die Quantisierung zurückzuführenden Rekonstruktionsfehlers;
- Mittel zur von einer laufenden Binärzuweisung ausgehenden Diskriminierung einer spezifischen Binärzuweisung nach einem Beschränkungskriterium der spektralen Gesamtleistungsdichte des berechneten Rekonstruktionsfehlers, wobei die spezifische Binärzuweisung für jedes Untersignal bei positiver Reaktion auf das Kriterium identisch zur laufenden Binärzuweisung und bei negativer Reaktion auf dieses Kriterium die spezifische Binärzuweisung unterschiedlich zur laufenden Binärzuweisung ist und einem Quantisierer des Untersignals entspricht, der die beste Verbesserung des auf die Ratenveränderung bezogenen Wahrnehmungsabstandes ergibt, nach einem Kriterium zur Berechnung der spektralen Leistungsdichte dieses Fehlers für jedes Untersignal bei Verwendung eines zum laufenden Quantisierer benachbarten Quantisierers und zur Berechnung des Wahrnehmungsabstandes in Bezug auf die entsprechende Codierungsrate.

**15.** Vorrichtung nach Anspruch 12, **dadurch gekennzeichnet, dass** für eine iterative Binärzuweisung, die nach einem Wahrnehmungsabstandsbeschränkungskriterium im Wahrnehmungsbereich ausgeführt wird, in dem jedes durch ein Frequenzunterband gebildete Untersignal in eine Vielzahl von Wahrnehmungswerten umgewandelt wird, die für die durch das Ursprungssignal und das wahrgenommene codierte-decodierte Signal erzeugte physiologische Wirkung repräsentativ sind, wobei diese Wahrnehmungswerte den Wahrnehmungsbereich darstellen, die Mittel zur Schätzung der Differenz zwischen dem codierten-decodierten Signal und dem Ursprungssignal wenigstens umfassen:

- Mittel zur Berechnung des Quantisierungsfehlers und der auf die Quantisierung zurückzuführenden geschätzten Rate für jedes Untersignal und für jeden Quantisierer einer Vielzahl von Quantisierern, wobei die Mittel zur Berechnung den Satz der durch die Analysefilterungsmittel gelieferten Untersignale empfangen und für jedes Untersignal und jeden Quantisierer einen Satz von Werten der Rate und des quadratischen Quantisierungsfehlers liefern,
- Synthesefilterungsmittel, welche den Satz der durch die Analysefilterungsmittel gelieferten Untersignale empfangen und ein geschätztes codiertes-decodiertes Signal liefern;
- Subtrahierermittel, die das Ursprungssignal und das geschätzte codierte-decodierte Signal empfangen und ein Differenzsignal liefern, wobei das Ursprungssignal, das Differenzsignal und der Satz von Werten an die Mittel zur iterativen Binärzuweisung geliefert werden.

**16.** Vorrichtung nach Anspruch 12 und 15, **dadurch gekennzeichnet, dass** die Mittel zur iterativen Binärzuweisung wenigstens enthalten:

- einen das Ursprungssignal empfangenden psychophysikalischen Modul, der es erlaubt, jedes der Untersignale in eine Vielzahl von Wahrnehmungswerten umzuwandeln, die den Wahrnehmungsbereich darstellen;
- Mittel zur Berechnung des berechneten Wahrnehmungsabstandes zwischen dem Ursprungssignal und dem geschätzten codierten-decodierten Signal nach den Wahrnehmungswerten unter Berücksichtigung des Filterungsfehlers bei der Zerlegung in Frequenzunterbänder;
- Mittel zur von einer laufenden Binärzuweisung ausgehenden Diskriminierung einer spezifischen Binärzuweisung nach einem Wahrnehmungsabstandsbeschränkungskriterium dieses berechneten Wahrnehmungsabstandes, wobei die spezifische Binärzuweisung für jedes Untersignal identisch zur laufenden Binärzuweisung bei positiver Reaktion auf dieses Beschränkungskriterium ist und die spezifische Binärzuweisung bei negativer Reaktion auf dieses Beschränkungskriterium gegenüber der laufenden Binärzuweisung unterschiedlich ist und einem Quantisierer des Untersignals entspricht, der zur besten Verbesserung des auf die Codierungsrate bezogenen berechneten Wahrnehmungsabstandes bei Verwendung eines zu diesem laufenden Quantisierer benachbarten Quantisierers führt.

## Claims

**1.** Method of coding and compressing a digital signal, incorporating control of the final reconstruction, in which an original digital signal made up of a succession of sample frames is broken down into frequency sub-bands constituting sub-signals, and each sub-signal is subjected to a binary allocation process followed by quantification based on this allocation, in order to generate a coded digital signal, **characterised in that** said method comprises at least the steps which consist of:

- a first estimation of a coded and decoded digital signal ($S_{cde}$);
- an estimation of the difference between the original signal ($S_0$) and the estimated coded-decoded digital signal ($S_{cde}$), said estimated difference being a function of the filtering error incurred during the breakdown into sub-bands and the quantification error for a plurality of quantifiers in each sub-signal;
- and an iterative binary allocation, the criterion being a constraint on the distance between the estimated coded-decoded digital signal and the original signal and a constraint on the coding rate respectively incorporating a calculation of the total coding error, which involves, in the case of a current quantifier and an adjacent quantifier from said plurality of quantifiers, allocating an optimum quantifier to reduce said distance and/or cording error and refine said first estimation of the coded-decoded signal.

2. Method as claimed in claim 1, **characterised in that** said iterative binary allocation is operated based on the criterion of a distance constraint in the frequency domain, each sub-signal corresponding to a frequency sub-band obtained by a breakdown into frequency sub-bands, at a variable coding rate or under the constraint of a constant rate.

3. Method as claimed in claim 2, **characterised in that** in order to control the reconstruction error in the frequency domain, said estimation of the difference between the original signal and the estimated coded-decoded signal incorporates the following steps which consist in:

- calculating the filtering error incurred by the breakdown into frequency sub-bands and by the reconstruction of these frequency sub-bands;
- establishing a law of perceptive constraint in the frequency domain;
- using said law of perceptive constraint and said filtering error to calculate a corrected perceptive constraint and, for each sub-signal:

- calculating, for each quantifier in said plurality of quantifiers, the number of possible allocated bits and the quadratic error due to the quantification noise;
- sorting the quantifiers as a function of the quadratic error of the quantification noise;
- initialising the choice of at least one quantifier from among the quantifiers.

4. Method as claimed in claim 2 or 3, **characterised in that**, if using a variable coding rate, said iterative binary allocation consists in:

- calculating the total power spectral density of the reconstruction error due to the quantification;
- subjecting the total power spectral density of the calculated reconstruction error to said frequency constraint criterion and, in the event of a positive response to this criterion, adopting the current quantifier as a quantifier for each sub-signal, and, in the event of a negative response to this criterion,
- calculating the power spectral density of the total error for each sub-signal, using a quantifier adjacent to the current quantifier and calculating the gain in perceptive distance relative to the corresponding coding rate;
- modifying the quantifier of the sub-signal which produces the best improvement in the perceptive distance relative to the rate variation, which will allow the binary allocation to be shifted to an optimal allocation.

5. Method as claimed in one of claims 2, 3 or 4, **characterised in that**, if using a fixed coding rate, it consists in:

- calculating the total power spectral density of the reconstruction error due to the quantification;
- subjecting the total power spectral density of the calculated reconstruction error to the coding rate constraint criterion and, in the event of a positive response to this criterion, adopting the current quantifier as a quantifier for each sub-signal, and, in the event of a negative response to this criterion,
- calculating the power spectral density of the total error for each sub-signal, using a quantifier adjacent to the current quantifier and calculating the variation in perceptive distance relative to the rate,
- modifying the quantifier of the sub-signal which produces the smallest variation in the perceptive distance relative to the rate.

6. Method as claimed in claim 1, **characterised in that** said iterative binary allocation is operated based the criterion of the distance constraint in the perceptive domain, said step of estimating the difference between the original signal and the estimated coded-decoded digital signal being run on the basis of a psycho-physical module, said psycho-physical module enabling a plurality of perceptive values to be calculated which are representative of the physiological effect produced by said original signal and estimating a plurality of perceptive values representative of the physiological effect of the estimated coded-decoded digital signal, given that said original signal, said estimated difference and the quantification error of each sub-signal are known, said perceptive values representing the perceptive domain.

7. Method as claimed in claim 6, **characterised in that**, in order to control the final reconstruction error in the perceptive domain, said step of estimating the difference between the estimated coded-decoded digital signal and the original signal comprises the following successive steps, which consist in:

- calculating the breakdown filtering error and analysing the frequency sub-bands and, for each sub-signal,
- calculating the number of possible allocated bits and the quadratic error due to the quantification noise for each quantifier of said plurality of quantifiers,
- sorting the quantifiers as a function of the quadratic error incurred by the quantification noise,
- initialising the choice of at least one quantifier from among the sorted quantifiers.

8. Method as claimed in claim 7, **characterised in that** said step of initialising the choice of at least one quantifier consists, for each sub-signal, in selecting the quantifier which, for a minimal number of bits, transforms this sub-signal into a quantified sub-signal of which the set of perceptive values is essentially identical except for the differential perception thresholds.

9. Method as claimed in claim 7, **characterised in that** said step of initialising the choice of at least one quantifier consists, for each sub-signal, in selecting the quantifier which, for a minimal number of bits, transforms this sub-signal into a quantified sub-signal whose error, relative to this sub-signal, is not detectable in the presence of the original digital signal, the criterion determining the non-detectability of the quantified sub-signal relating to the perceptive values of the quantification noise.

10. Method as claimed in claim 7, **characterised in that**, if using a variable coding rate, said iterative binary allocation consists in:

- calculating, on the basis of said perceptive values, the perceptive distance between the original signal and the reconstructed signal after quantification, taking account of the breakdown and analysis filtering error,
- subjecting the calculated perceptive distance to a criterion based on perceptive distance and, in the event of a positive response to this criterion, adopting the current quantifier as a quantifier for each sub-signal, and, in the event of a negative response to this criterion,
- calculating the perceptive distance for each sub-signal using a quantifier adjacent to the current quantifier and calculating the gain in perceptive distance relative to the rate,
- modifying the quantifier of the sub-signal which produces the best improvement in the perceptive distance relative to the rate, which will enable the binary allocation to be shifted to an optimal allocation.

11. Method as claimed in one of claims 7 or 10, **characterised in that**, if using a fixed coding rate, it consists in:

- calculating the perceptive distance between the original signal and the coded-decoded digital signal, taking account of the filtering error,
- subjecting the calculated perceptive distance to a criterion imposing a constraint on the coding rate and, in the event of a positive response to this criterion, adapting the current quantifier as a quantifier for each sub-signal and, in the event of a negative response to this criterion,
- calculating the perceptive distance for each sub-signal using a quantifier adjacent to the current quantifier and calculating the variation in perceptive distance relative to the rate,
- modifying the quantifier of the sub-signal which produces the smallest variation in perceptive distance relative to the rate.

12. Device for coding and compressing a digital signal incorporating control of the final reconstruction, comprising filtering means for analysing the original signal broken down into frequency sub-bands to enable sub-signals to be created, means for selecting quantifiers and quantifier means permitting a binary allocation for each sub-signal and a quantification based on this allocation, **characterised in that** said selector means (2) comprise:

- means (21) for estimating the difference between the original signal ($S_0$) and a first approximation of a coded-decoded signal ($S_{cde}$), said estimated difference being a function of the filtering error incurred by the breakdown into sub-bands and the quantification error of each sub-signal, and

- means (22) programmed to run an iterative binary allocation, the criterion being a constraint on the distance between the coded-decoded digital signal and the original signal, and respectively a constraint on the coding rate, including calculation of the total coding error, for a current quantifier and an adjacent quantifier from among a plurality of quantifiers, allocating an optimum quantifier to reduce said distance and/or coding error and refining said first approximation of the coded-decoded signal.

**13.** Device as claimed in claim 12, **characterised in that**, in order to run an iterative binary allocation based on a criterion imposing a constraint on perceptive distance in the frequency domain, said means for estimating the difference between the original signal and the coded-decoded signal comprises at least:

- means for calculating the quantification error and the estimated rate due to the quantification process, for each sub-band and each quantifier of a plurality of quantifiers, said calculating means receiving the set of sub-signals output by said analysis filtering means and outputting a set of values for rate and quantification quadratic error for each sub-signal and each quantifier;
- synthesis filtering means receiving the set of sub-signals output by the analysis filtering means and outputting the estimated coded-decoded signal,
- subtraction means receiving said original signal and said estimated coded-decoded signal and outputting a differential signal;
- a module for psycho-physically analysing the original signal, which receives said original signal and enables said original signal to be interpreted on the basis of a law of perceptive constraint in the frequency domain, said psycho-physical analysis module outputting an interpreted original signal;
- calculating means receiving said interpreted original signal and said differential signal and outputting a corrected perceptive constraint signal, said set of values and said corrected perceptive constraint signal being forwarded to said iterative binary allocation means.

**14.** Device as claimed in claims 12 and 13, **characterised in that** said iterative binary allocation means comprise at least:

- means for calculating the total power spectral density of the reconstruction error incurred by the quantification;
- means for identifying a specific binary allocation from a current binary allocation based on a criterion imposing a constraint on the total power spectral density of the calculated reconstruction error, the specific binary allocation for each sub-signal being identical to the current binary allocation if the response to said criterion is positive and, if the response to this criterion is negative, the specific binary allocation is different from the current binary allocation and corresponds to a quantifier of the sub-signal which produces the best improvement in the perceptive distance relative to the variation in rate, on the basis of a criterion for calculating the power spectral density of this error for each sub-signal using a quantifier adjacent to this current quantifier and calculating the perceptive distance relative to the corresponding coding rate.

**15.** Device as claimed in claim 12, **characterised in that** in order to run an iterative binary allocation based on a criterion imposing a constraint on perceptive distance in the perceptive domain, in which each sub-signal constituted by a sub-band of frequencies is transformed into a plurality of perceptive values representative of the physiological effect produced by the original signal and the perceived coded-decoded signal, these perceptive values representing the perceptive domain, said means for estimating the difference between the coded-decoded signal and the original signal comprise at least:

- means for calculating the quantification error and estimated rate due to the quantification for each sub-signal and for each quantifier from a plurality of quantifiers, said calculating means receiving all said sub-signals output by said analysis filtering means and outputting for each sub-signal and each quantifier a set of rate and quantification quadratic error values,
- synthesis filtering means receiving the set of sub-signals output by the analysis filtering means and outputting an estimate coded-decoded signal;
- subtraction means receiving said original signal and said estimated coded-decoded signal and outputting a differential signal, the original signal, differential signal and set of values being forwarded to said iterative binary allocation means.

**16.** Device as claimed in claim 12 and 15, **characterised in that** said iterative binary allocation means comprises at least:

- a psycho-physical module receiving said original signal, enabling each of the sub-signals to be transformed into a plurality of perceptive values representing the perceptive domain;
- means for calculating, on the basis of said perceptive values, the perceptive distance calculated between said original signal and the estimated coded-decoded signal, taking account of the filtering error incurred by the breakdown into frequency sub-bands;
- means for distinguishing a specific binary allocation from a current binary allocation, on the basis of a criterion imposing a perceptive distance constraint on this calculated perceptive distance, the specific binary allocation for each sub-signal being identical to the current binary allocation if the response to this constraint criterion is positive and, if the response to this constraint criterion is negative, the specific binary allocation is different from the current binary allocation and corresponds to a quantifier of the sub-signal which produces the best improvement in the calculated perceptive distance relative to the coding rate using a quantifier adjacent to this current quantifier.

$$V = \left\{ x_k, \ldots, x_{k+N-1} \right\}$$

$$a_i$$

$$B = a_4 - V$$

FIG.1. (ART ANTERIEUR)

SIGNAL NUMÉRIQUE D'ORIGINE

TRANSFORMATION SOUS-BANDES — 100

FIG.4a.

101

ALLOCATION BINAIRE

QUANTIFICATION

102b

A    D

F    B

102

ψ

102a

SIGNAL CODE

```
┌─────────────────────────────────────┐
│ _ SIGNAL D'ORIGINE: so               │
│        TRAME                         │──── 100
│ _ DÉCOMPOSITION EN SOUS-BANDES       │
│     ( SOUS-SIGNAUX )  s b            │
└─────────────────────────────────────┘
                    │
                    ▼
┌─────────────────────────────────────┐
│ _ RECOMPOSITION DES SOUS-SIGNAUX     │
│   EN SIGNAL NUMÉRIQUE CODÉ-DÉCODÉ    │
│   ESTIMÉ scde                        │
│   CALCUL                             │──── 101
│ —SIGNAL DIFFÉRENCE (ERREUR DE FILTRAGE)│
│ —DÉBITS ET ERREURS QUADRATIQUES PAR  │
│   SOUS-BANDE ET QUANTIFICATEUR       │
└─────────────────────────────────────┘
                    │
                    ▼
┌─────────────────────────────────────┐
│ ALLOCATION BINAIRE ITÉRATIVE SUR     │
│ CRITÈRE DE CONTRAINTE DE DISTANCE    │
│ ENTRE                                │
│ . SIGNAL D'ORIGINE so                │
│ . SIGNAL NUMÉRIQUE CODÉ-DÉCODÉ       │──── 102
│   ESTIMÉ scde                        │
│ / DE DÉBIT DE CODAGE POUR UN         │
│   QUANTIFICATEUR COURANT ET UN       │
│   QUANTIFICATEUR VOISIN              │
└─────────────────────────────────────┘
                    │
                    ▼
           ⎛ ALLOCATION BINAIRE ⎞
          ⎜ OPTIMUM POUR ATTRIBUTION ⎟──── 103
           ⎜ D'UN QUANTIFICATEUR ⎟
           ⎝ OPTIMUM ⎠
```

# FIG.2

DE 100

LOI DE CONTRAINTE PERCEPTIVE DOMAINE FRÉQUENTIEL

$101_1$

soi

CALCUL DE L'ERREUR DE DÉCOMPOSITION-RECOMPOSITION DANS LE DOMAINE FRÉQUENTIEL (BANC DE FILTRES DE SYNTHÈSE + FFT + LISSAGE)
$101_0$

MODIFICATION DE LA COURBE DE CONTRAINTE FRÉQUENTIELLE
$101_2$

CALCUL POUR CHAQUE SOUS-SIGNAL ET POUR CHAQUE QUANTIFICATEUR DU NOMBRE DE BITS ET DE L'ERREUR QUADRATIQUE ASSOCIÉS
$101_3$

$101$

TRI DES QUANTIFICATEURS POUR CHAQUE SOUS-SIGNAL
$101_4$

INITIALISATION DES CHOIX DES QUANTIFICATEURS
$101_5$

FIG.3a.

CALCULER LA DENSITÉ SPECTRALE DE PUISSANCE TOTALE DE L'ERREUR DE RECONSTRUCTION DUE A LA QUANTIFICATION
$102_0$

$102_1$

LE CRITÈRE DE CONTRAINTE FRÉQUENTIELLE EST-IL SATISFAIT ?

OUI

$102_5$

FIN

$102$

NON

$102_2$

POUR CHAQUE SOUS-SIGNAL, CALCULER LA DENSITÉ SPECTRALE DE PUISSANCE DE L'ERREUR TOTALE SI ON UTILISE LE QUANTIFICATEUR VOISIN ET CALCULER DELTA J / DELTA R
$102_4$

PRENDRE LE QUANTIFICATEUR VOISIN POUR LE SOUS-SIGNAL QUI AMELIORE LE PLUS DELTA J / DELTA R
$102_3$

$101_5$ OU $102_5$ DE FIGURE 3a

CALCULER LA DENSITÉ
SPECTRALE DE PUISSANCE TOTALE
DE L'ERREUR DE RECONSTRUCTION
DUE A LA QUANTIFICATION — $102'_0$

LE
CRITÈRE DE
CONTRAINTE
DE DÉBIT DE
CODAGE EST·IL
SATISFAIT ? — $102'_1$

$102'_5$

OUI

FIN

NON

POUR CHAQUE SOUS-SIGNAL
CALCULER
DENSITÉ SPECTRALE DE PUISSANCE
DE L'ERREUR TOTALE LORS DE
L'UTILISATION D'UN QUANTIFICATEUR
VOISIN ET DE LA VARIATION DE
DISTANCE PERCEPTIVE PAR RAPPORT
AU DÉBIT. — $102'_2$

$102'_4$

RETENIR LE QUANTIFICATEUR DU
SOUS·SIGNAL QUI PRODUIT LA PLUS
FAIBLE VARIATION DE DISTANCE
PERCEPTIVE RAPPORTÉE AU DÉBIT — $102'_3$

FIG.3b

DE 100

CALCUL DE L'ERREUR DE FILTRAGE DANS LE DOMAINE FRÉQUENTIEL — $101_0$

CALCUL POUR CHAQUE SOUS-SIGNAL ET CHAQUE QUANTIFICATEUR DU NOMBRE DE BITS ET DE L'ERREUR QUADRATIQUE DE QUANTIFICATION — $101_3$

$101$

TRI DES QUANTIFICATEURS POUR CHAQUE SOUS-SIGNAL — $101_4$

INITIALISATION DU CHOIX DES QUANTIFICATEURS, QUANTIFICATEUR COURANT — $101_5$

so
scde
MODULE PSYCHOPHYSIQUE
— $102a$

CALCULER LA DISTANCE PERCEPTIVE SUR LES VALEURS PERCEPTIVES DE so ET scde — $102_0$

$102_5$
FIN : QUANTIFICATEUR RETENU = QUANTIFICATEUR COURANT

OUI

LE CRITÈRE DE DISTANCE PERCEPTIVE SUR LA DISTANCE PERCEPTIVE CALCULÉE EST-IL SATISFAIT ? — $102_1$

$102_4$

$102b$

$102$

NON

$102_2$
CALCULER POUR CHAQUE SOUS-SIGNAL LA DISTANCE PERCEPTIVE SUR UTILISATION D'UN QUANTIFICATEUR VOISIN

FIG.4b

$102_3$
RETENIR LE QUANTIFICATEUR DU SOUS-SIGNAL QUI PRODUIT LA MEILLEURE AMÉLIORATION DE LA DISTANCE PERCEPTIVE RAPPORTÉE AU DÉBIT

FIG.4c

FIG.4d MODULE PSYCHO ACOUSTIQUE

FIG.4e MODULE PSYCHO VISUEL

FIG.5a.

EP 0 812 070 B1

# FIG.5b.

BANC DE FILTRES D'ANALYSE

sb

sb

sb

so

MODULE DE QUANTIFICATION FINALE

sc

3

1

2

BANC DE FILTRES DE SYNTHESE

211

210

MODULE DE CALCUL DE L'ERREUR ET DU DÉBIT POUR CHAQUE SOUS-BANDE ET CHAQUE QUANTIFICATEUR

ev

221

212

so

scde

212a

sd

21

MODULE ITERATIF DE CHOIX DES QUANTIFICATEURS

MODULE PSYCHOPHYSIQUE

220

222

22

so

FIG. 5c.